(19) Europäisches Patentamt / European Patent Office / Office européen des brevets

(11) **EP 4 503 230 A1**

(12) **EUROPEAN PATENT APPLICATION**
published in accordance with Art. 153(4) EPC

(43) Date of publication:
05.02.2025 Bulletin 2025/06

(21) Application number: 23780754.0

(22) Date of filing: 29.03.2023

(51) International Patent Classification (IPC):
*H01M 10/0567* (2010.01)    *H01M 10/052* (2010.01)
*H01M 10/0568* (2010.01)    *H01M 10/0569* (2010.01)
*H01M 50/417* (2021.01)    *H01M 50/443* (2021.01)
*H01M 50/451* (2021.01)    *H01M 50/463* (2021.01)
*H01M 50/491* (2021.01)

(52) Cooperative Patent Classification (CPC):
**H01M 10/052; H01M 10/0567; H01M 10/0568;**
**H01M 10/0569; H01M 50/417; H01M 50/443;**
**H01M 50/451; H01M 50/463; H01M 50/491;**
Y02E 60/10; Y02P 70/50

(86) International application number:
**PCT/JP2023/012953**

(87) International publication number:
**WO 2023/190746 (05.10.2023 Gazette 2023/40)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: 29.03.2022 JP 2022054396
29.03.2022 JP 2022054466

(71) Applicant: **Asahi Kasei Kabushiki Kaisha**
**Tokyo 1000006 (JP)**

(72) Inventors:
• **KAMINE, Hirokazu**
**Tokyo 100-0006 (JP)**
• **NODA, Daisuke**
**Tokyo 100-0006 (JP)**

(74) Representative: **dompatent von Kreisler Selting**
**Werner -**
**Partnerschaft von Patent- und Rechtsanwälten**
**mbB**
**Deichmannhaus am Dom**
**Bahnhofsvorplatz 1**
**50667 Köln (DE)**

(54) **NONAQUEOUS SECONDARY BATTERY**

(57)    A nonaqueous secondary battery having low nonaqueous electrolyte solution volatility and high ionic conductivity, even when using a nonaqueous electrolyte solution comprising acetonitrile and a polypropylene-based separator having a specific porous structure, is provided.

A nonaqueous secondary battery comprising a positive electrode containing one or more positive electrode active materials capable of occluding and releasing lithium ions, a negative electrode containing a material capable of occluding and releasing lithium ions, a nonaqueous electrolyte solution, and a separator, wherein
the nonaqueous electrolyte solution comprises a nonaqueous solvent, a lithium salt, and an organic polymer,
the nonaqueous solvent comprises 10% by volume or greater and 90% by volume or less of acetonitrile,
the lithium salt comprises a lithium-containing imide salt and is contained in an amount of 0.5 mol/L or more and 2 mol/L or less relative to the nonaqueous electrolyte solution,
the organic polymer has a viscosity average molecular weight of 30,000 or greater and 1,000,000 or less, and
the nonaqueous electrolyte solution has a viscosity at 25°C of 2 mPa·s or more and 500 mPa·s or less, an ionic conductivity of 13 mS/cm or more, and a value Z represented by formula (1) below:

$$Z = \text{viscosity (mPa·s) of electrolyte solution} \times \text{ionic conductivity (mS/cm) of electrolyte solution}$$
$$\cdots (1)$$

EP 4 503 230 A1

of 70 or greater.

# Fig. 1

## Description

FIELD

The present invention relates to a nonaqueous secondary battery.

BACKGROUND

Nonaqueous secondary batteries, including lithium-ion batteries, are largely characterized by small size, high capacity, and high output, and are widely used as power sources for various portable electronic devices.

To implement batteries of such small size and high capacity, the selection of a separator arranged between electrodes is important. Conventionally, paper, woven fabrics, nonwoven fabrics, and glass mats have been used as separators. However, these materials have issues in safety due to the structures thereof. In recent years, separators having small pores, such as polyolefin microporous membranes, have been used, and the shutdown function and interelectrode short-circuit suppressing function thereof have improved safety.

Conventionally, cyclic carbonate or cyclic ester solvents have been used in nonaqueous electrolyte solutions for nonaqueous secondary batteries, and there has been an issue of poor impregnation properties of separators with the electrolyte solutions.

However, in recent years, the impregnation properties of separators have improved by diluting a chain carbonate ester in and further adding a surfactant to a nonaqueous electrolyte solution in which a cyclic carbonate or cyclic ester solvent is used.

[CITATION LIST]

[PATENT LITERATURE]

[PTL 1] Japanese Unexamined Patent Publication (Kokai) No. 2014-13659
[PTL 2] Japanese Unexamined Patent Publication (Kokai) No. 2000-133309

SUMMARY

[TECHNICAL PROBLEM]

Compared to nonaqueous electrolyte solutions using esters as a solvent, as described above, nonaqueous electrolyte solutions comprising acetonitrile have high ionic conductivity, and are therefore applied to nonaqueous secondary batteries to obtain high output performance. However, it was newly found that when using a nonaqueous electrolyte solution comprising acetonitrile, which has a lower boiling point compared to ester solvents that are generally used, there is an issue of volatility in the process of manufacturing nonaqueous secondary batteries.

PTL 1 reports that reductive decomposition reactions on a negative electrode active material surface are suppressed by containing a polymer having a reactive functional group, such as an acrylic ester or a methacrylic ester, in a nonaqueous electrolyte solution, and battery characteristics can thereby be improved. However, PTL 1 does not mention the issue relating to nonaqueous electrolyte solution volatility.

PTL 2 reports that reductive decomposition reactions on a negative electrode active material surface are suppressed by containing an organic polymer having a molecular weight of 20,000 or less in a nonaqueous electrolyte solution, and battery characteristics can thereby be improved. However, PTL 2 does not mention the issue relating to nonaqueous electrolyte solution volatility.

The present invention has been made in view of the above issue, and has an object of providing a nonaqueous secondary battery having low nonaqueous electrolyte solution volatility and high ionic conductivity, even when using a nonaqueous electrolyte solution comprising acetonitrile.

The present invention also has an object of providing a nonaqueous electrolyte solution comprising acetonitrile capable of implementing such a nonaqueous secondary battery.

[SOLUTION TO PROBLEM]

One aspect of the present invention is as follows.

[1] A nonaqueous secondary battery comprising a positive electrode containing one or more positive electrode active materials capable of occluding and releasing lithium ions, a negative electrode containing a material capable of occluding and releasing lithium ions, a nonaqueous electrolyte solution, and a separator, wherein

the nonaqueous electrolyte solution comprises a nonaqueous solvent, a lithium salt, and an organic polymer, the nonaqueous solvent comprises 10% by volume or greater and 90% by volume or less of acetonitrile, the lithium salt comprises a lithium-containing imide salt and is contained in an amount of 0.5 mol/L or more and 2 mol/L or less relative to the nonaqueous electrolyte solution, the organic polymer has a viscosity average molecular weight of 30,000 or greater and 1,000,000 or less, and the nonaqueous electrolyte solution has a viscosity at 25°C of 2 mPa·s or more and 500 mPa·s or less, an ionic conductivity of 13 mS/cm or more, and Z represented by formula (1) below:

$$Z = \text{viscosity (mPa·s) of electrolyte solution} \times \text{ionic conductivity (mS/cm) of electrolyte solution}$$

$$\cdots (1)$$

of 70 or greater.

[2] The nonaqueous secondary battery according to Item 1, wherein the organic polymer has at least one of structures of a polyether structure and an ester structure.

[3] The nonaqueous secondary battery according to Item 1 or 2, wherein the organic polymer comprises at least one of polyethylene oxide and poly(methyl methacrylate).

[4] The nonaqueous secondary battery according to any one of Items 1 to 3, wherein the organic polymer has a viscosity average molecular weight of 90,000 or greater and 650,000 or less.

[5] The nonaqueous secondary battery according to any one of Items 1 to 4, wherein the organic polymer is contained in an amount of 0.1% by mass or greater and 10% by mass or less relative to a total amount of the nonaqueous electrolyte solution.

[6] The nonaqueous secondary battery according to any one of Items 1 to 5, wherein the organic polymer is contained in an amount of 0.1% by mass or greater and 3% by mass or less relative to a total amount of the nonaqueous electrolyte solution.

[7] The nonaqueous secondary battery according to any one of Items 1 to 6, wherein at least one of areas of the positive electrode and the negative electrode is 100 cm$^2$ or more.

[8] The nonaqueous secondary battery according to any one of Items 1 to 7, wherein any of structural bodies of

a wound body in which a laminated body in which the separator is interposed between the positive electrode and the negative electrode is wound;
a laminated body in which positive electrode and negative electrode sheets are alternately layered via the separator; and
a laminated body in which positive electrodes and negative electrodes are alternately inserted between zigzagging folds of the separator
is housed within a battery outer packaging.

[9] The nonaqueous secondary battery according to any one of Items 1 to 8, wherein the nonaqueous electrolyte solution has a viscosity at 25°C of 2.5 mPa·s or more and 150 mPa·s or less and an ionic conductivity at 25°C of 10 mS/cm or more and 40 mS/cm or less.

[10] The nonaqueous secondary battery according to any one of Items 1 to 9, wherein

the lithium salt further comprises lithium hexafluorophosphate (LiPF$_6$), and
the lithium-containing imide salt and the LiPF$_6$ are contained in a molar concentration so that the LiPF$_6$ < the lithium-containing imide salt.

[11] The nonaqueous secondary battery according to any one of Items 1 to 10, wherein the nonaqueous solvent comprises 20% by volume or greater and 90% by volume or less of acetonitrile.

[12] The nonaqueous secondary battery according to any one of Items 1 to 11, wherein the separator has a porosity of 20% or greater and 90% or less and an air permeability resistance of 20 s/100 cm$^3$ or more and 500 s/100 cm$^3$ or less.

[13] The nonaqueous secondary battery according to any one of Items 1 to 12, wherein

the separator

comprises a porous layer comprising, on one side or both sides thereof, an inorganic filler,
the inorganic filler is at least one selected from the group consisting of aluminum oxide, aluminum hydroxide oxide, and aluminum silicate.

[14] The nonaqueous secondary battery according to any one of Items 1 to 13, wherein

the separator comprises a polypropylene-based microporous membrane,
in the microporous membrane, polymer matrices comprising the polypropylene extend along a direction perpendicular to membrane thickness,
fibrils comprising the polypropylene are formed between the polymer matrices, and
micropores are formed between a plurality of the fibrils.

[15] The nonaqueous secondary battery according to any one of Items 1 to 14, wherein

the separator comprises a polypropylene-based microporous membrane, and
a pore size ratio a/b of an average long pore size a of the microporous membrane to a pore size b orthogonal to the average long pore size a is 0.5 or greater and 30 or less.

[16] A nonaqueous electrolyte solution for use in a nonaqueous secondary battery comprising a positive electrode containing one or more positive electrode active materials capable of occluding and releasing lithium ions, a negative electrode containing a material capable of occluding and releasing lithium ions, the nonaqueous electrolyte solution, and a separator, wherein

the nonaqueous electrolyte solution comprises a nonaqueous solvent, a lithium salt, and an organic polymer,
the nonaqueous solvent comprises 10% by volume or greater and 90% by volume or less of acetonitrile,
the lithium salt comprises a lithium-containing imide salt and is contained in an amount of 0.5 mol/L or more and 2 mol/L or less relative to the nonaqueous electrolyte solution,
the organic polymer has a viscosity average molecular weight of 30,000 or greater and 1,000,000 or less, and
the nonaqueous electrolyte solution has a viscosity at 25°C of 2 mPa•s or more and 500 mPa•s or less, an ionic conductivity of 13 mS/cm or more, and Z represented by formula (1) below:

$$Z = \text{viscosity (mPa·s) of electrolyte solution} \times \text{ionic conductivity (mS/cm) of electrolyte solution} \cdots (1)$$

of 70 or greater.

In addition, the present invention relates to the following aspect.

[1A] A nonaqueous secondary battery comprising a positive electrode containing one or more positive electrode active materials capable of occluding and releasing lithium ions, a negative electrode containing a material capable of occluding and releasing lithium ions, a nonaqueous electrolyte solution, and a separator, wherein

the nonaqueous electrolyte solution comprises a nonaqueous solvent, a lithium salt, and an organic polymer,
the nonaqueous solvent comprises 5% by volume or greater and 90% by volume or less of acetonitrile,
the lithium salt comprises a lithium-containing imide salt and is contained in an amount of 1 mol/L or more and 2 mol/L or less relative to the nonaqueous electrolyte solution,
the organic polymer has at least one of structures of a polyether structure and a 5-membered cyclic lactam structure,
the organic polymer has a viscosity average molecular weight of 30,000 or greater and 1,000,000 or less,
the separator comprises a polypropylene-based microporous membrane, and
the polypropylene-based microporous membrane has polymer matrices comprising polypropylene extending along one direction perpendicular to membrane thickness, and comprises fibrils comprising the polypropylene between the polymer matrices and micropores between a plurality of the fibrils.

[2A] The nonaqueous secondary battery according to Item 1A, wherein the organic polymer comprises at least one of polyethylene oxide and polyvinylpyrrolidone.
[3A] The nonaqueous secondary battery according to Item 1A or 2A, wherein the organic polymer is contained in an amount of 0.1% by mass or greater and 10% by mass or less relative to a total amount of the nonaqueous electrolyte solution.

[4A] The nonaqueous secondary battery according to any one of Items 1A to 3A, wherein the nonaqueous electrolyte solution has a viscosity at 25°C of 1.5 mPa•s or more and 40 mPa•s or less and an ionic conductivity at 25°C of 10 mS/cm or more and 40 mS/cm or less.

[5A] The nonaqueous secondary battery according to any one of Items 1A to 4A, wherein a pore size ratio a/b of an average long pore size a of the polypropylene-based microporous membrane to a pore size b orthogonal to the average long pore size a is 0.5 or greater and 30 or less.

[6A] The nonaqueous secondary battery according to any one of Items 1A to 5A, wherein the separator has a porosity of 30% or greater and 80% or less and an air permeability resistance of 100 s/100 cm$^3$ or more and 500 s/100 cm$^3$ or less.

[7A] The nonaqueous secondary battery according to any one of Items 1A to 6A, wherein the lithium salt further comprises lithium hexafluorophosphate (LiPF$_6$), and the lithium-containing imide salt and the LiPF$_6$ are contained in a molar concentration so that the LiPF$_6$ < the lithium-containing imide salt.

Further, the present invention relates to the following aspect.

[1B]
A nonaqueous secondary battery comprising a positive electrode containing one or more positive electrode active materials capable of occluding and releasing lithium ions, a negative electrode containing a material capable of occluding and releasing lithium ions, a nonaqueous electrolyte solution, and a separator, wherein

the nonaqueous electrolyte solution comprises a nonaqueous solvent, a lithium salt, and an organic polymer,
the nonaqueous solvent comprises 5% by volume or greater and 90% by volume or less of acetonitrile,
the lithium salt comprises a lithium-containing imide salt and is contained in an amount of 1 mol/L or more and 2 mol/L or less relative to the nonaqueous electrolyte solution,
the organic polymer has at least one of structures of a polyether structure and a 5-membered cyclic lactam structure,
the organic polymer has a viscosity average molecular weight of 30,000 or greater and 1,000,000 or less,
the separator is a microporous membrane comprising at least one of polyethylene and polypropylene and includes a porous layer comprising an inorganic filler on one side or both sides of the microporous membrane.

[2B] The nonaqueous secondary battery according to Item 1B, wherein the organic polymer comprises at least one of polyethylene oxide and polyvinylpyrrolidone.

[3B] The nonaqueous secondary battery according to Item 1B or 2B, wherein the organic polymer is contained in an amount of 0.1% by mass or greater and 10% by mass or less relative to a total amount of the nonaqueous electrolyte solution.

[4B] The nonaqueous secondary battery according to any one of Items 1B to 3B, wherein the nonaqueous electrolyte solution has a viscosity at 25°C of 1.5 mPa•s or more and 40 mPa•s or less and an ionic conductivity at 25°C of 10 mS/cm or more and 40 mS/cm or less.

[5B] The nonaqueous secondary battery according to any one of Items 1B to 4B, wherein the inorganic filler is at least one selected from the group consisting of aluminum oxide, aluminum hydroxide oxide, and aluminum silicate.

[6B] The nonaqueous secondary battery according to any one of Items 1B to 5B, wherein the separator has a porosity of 20% or greater and 90% or less and an air permeability resistance of 20 s/100 cm$^3$ or more and 500 s/100 cm$^3$ or less.

[7B] The nonaqueous secondary battery according to any one of Items 1B to 6B, wherein the lithium salt further comprises lithium hexafluorophosphate (LiPF$_6$), and the lithium-containing imide salt and the LiPF$_6$ are contained in a molar concentration so that the LiPF$_6$ < the lithium-containing imide salt.

[ADVANTAGEOUS EFFECTS OF INVENTION]

According to the present invention, a nonaqueous secondary battery having suppressed nonaqueous electrolyte solution volatility and high ionic conductivity, even when using a nonaqueous electrolyte solution comprising acetonitrile, can be provided.

According to the present invention, a nonaqueous electrolyte solution comprising acetonitrile capable of implementing such a nonaqueous secondary battery can also be provided.

BRIEF DESCRIPTION OF DRAWINGS

FIG. 1 is a plan view schematically showing one example of a nonaqueous secondary battery of the present embodiment.

FIG. 2 is a cross-sectional view of the nonaqueous secondary battery in FIG. 1 along the A-A line.

FIG. 3 is a scanning electron microscope (SEM) image of a polypropylene microporous membrane.

DESCRIPTION OF EMBODIMENTS

Hereinafter, the aspects for embodying the present invention (hereinafter, simply referred to as "the present embodiment") will be described. The present invention is not limited to the following embodiment, and can be modified in various ways without departing from the gist thereof. Numerical ranges described using "to" herein include the numerical values described before and after the term. In the present embodiment, the upper limit value or lower limit value described in a certain numerical range in a stepwise description of the numerical range can be substituted with the upper limit value or lower limit value of the numerical range in another stepwise description. In the present embodiment, the upper limit value or lower limit value described in a certain numerical range can be substituted with a value described in the Examples. In the present embodiment, features such as scale, shape, and length of each part shown in the drawings may be exaggerated for clarity.

[Nonaqueous secondary battery]

The nonaqueous secondary battery according to the present embodiment comprises a positive electrode containing one or more positive electrode active materials capable of occluding and releasing lithium ions, a negative electrode containing a material capable of occluding and releasing lithium ions, a nonaqueous electrolyte solution, and a separator.

The nonaqueous electrolyte solution comprises a nonaqueous solvent, a lithium salt, and an organic polymer.

In the nonaqueous secondary battery comprising a positive electrode containing one or more positive electrode active materials capable of occluding and releasing lithium ions, a negative electrode containing a material capable of occluding and releasing lithium ions, a nonaqueous electrolyte solution, and a separator,

the nonaqueous electrolyte comprises a nonaqueous solvent, a lithium salt, and an organic polymer,

the nonaqueous solvent comprises 10% by volume or greater and 90% by volume or less of acetonitrile,

the lithium salt comprises a lithium-containing imide salt and is contained in an amount of 0.5 mol/L or more and 2 mol/L or less relative to the nonaqueous electrolyte solution,

the organic polymer has a viscosity average molecular weight of 30,000 or greater and 1,000,000 or less, and

the nonaqueous electrolyte solution has a viscosity at 25°C of 2 mPa·s or more and 500 mPa·s or less, an ionic conductivity of 13 mS/cm or more, and a value Z represented by formula (1) below:

$$Z = \text{viscosity (mPa·s) of electrolyte solution} \times \text{ionic conductivity (mS/cm) of electrolyte solution}$$

$$\cdots (1)$$

of 70 or greater.

According to such an aspect, a nonaqueous secondary battery having low nonaqueous electrolyte solution volatility and high ionic conductivity, even when using an electrolyte solution comprising acetonitrile, can be provided.

The nonaqueous electrolyte solution according to the present embodiment can be used for configuring a nonaqueous secondary battery.

The nonaqueous secondary battery according to the present embodiment is configured by housing a positive electrode, a negative electrode, a separator, and a nonaqueous electrolyte solution inside a suitable battery outer packaging.

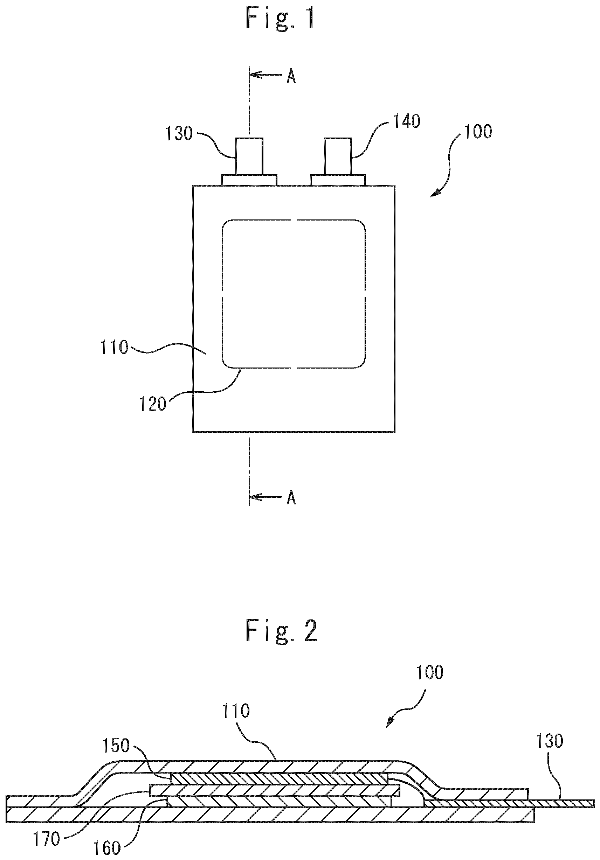

Specifically, the nonaqueous secondary battery according to the present embodiment may be the nonaqueous secondary battery 100 illustrated in FIGS. 1 and 2, where FIG. 1 is a plan view schematically showing a nonaqueous secondary battery, and FIG. 2 is a cross-sectional view of FIG. 1 along the A-A line.

The nonaqueous secondary battery 100 shown in FIG. 1 and FIG. 2 is configured as a pouchtype cell. For the nonaqueous secondary battery 100, a layered electrode structure configured by layering a positive electrode 150 and a negative electrode 160 via a separator 170; and a nonaqueous electrolyte solution (not illustrated) are housed within a space 120 of a battery outer packaging 110. The battery outer packaging 110, for example, is composed of aluminum laminate film, and the outer periphery of the space formed by two aluminum laminated films is sealed by heat-fusing the upper and lower films. The laminated body in which the positive electrode 150, the separator 170, and the negative electrode 160 are layered in order is impregnated with the nonaqueous electrolyte solution. To avoid complicating the drawing in FIG. 2, each layer constituting the battery outer packaging 110 and each layer of the positive electrode 150 and the negative electrode 160 are not shown separately.

The aluminum laminate film constituting the battery outer packaging 110 is preferably an aluminum foil coated on both sides with a polyolefin-based resin.

The positive electrode 150 is connected to a positive electrode lead body 130 within the nonaqueous secondary battery 100. Although not illustrated, the negative electrode 160 is connected to a negative electrode lead body 140 within the nonaqueous secondary battery 100. Each of the positive electrode lead body 130 and the negative electrode lead body 140 has one end pulled to the outside of the battery outer packaging 110 so as to be connectable to an external device. These ionomer portions are heat-fused with one side of the battery outer packaging 110.

The nonaqueous secondary battery 100 illustrated in FIGS. 1 and 2 comprises a layered electrode structure having one positive electrode 150 and one negative electrode 160. However, the numbers of positive electrodes 150 and negative electrodes 160 to be layered can be appropriately increased according to capacity design. In the case of a layered electrode structure having a plurality of positive electrodes 150 and a plurality of negative electrodes 160, tabs of the same pole may be joined by welding, and then joined to one lead body by welding, allowing the lead body to be extracted outside the battery. The above tabs of the same pole can be formed from exposed portions of the current collector, or formed by welding metal pieces to the exposed portions of the current collector.

The positive electrode 150 is composed of a positive electrode current collector and a positive electrode active material layer. The negative electrode 160 is composed of a negative electrode current collector and a negative electrode active material layer.

The positive electrode active material layer comprises a positive electrode active material, and the negative electrode active material layer comprises a negative electrode active material.

The positive electrode 150 and the negative electrode 160 are arranged so that the positive electrode active material layer and the negative electrode active material layer face each other via a separator 170.

Hereinafter, each element constituting the nonaqueous secondary battery according to the present embodiment will be described in order.

[Positive electrode]

In the nonaqueous secondary battery according to the present embodiment, the positive electrode contains one or more positive electrode active materials capable of occluding and releasing lithium ions, and may comprise a positive electrode active material layer on one side or both sides of a positive electrode current collector, as desired.

[Positive electrode current collector]

The positive electrode current collector, for example, is composed of a metal foil such as an aluminum foil, a nickel foil, or a stainless-steel foil. The positive electrode current collector may be subjected to carbon coating on the surface, or may be processed into a mesh form. The thickness of the positive electrode current collector is preferably 5 to 40 $\mu$m, more preferably 7 to 35 $\mu$m, and even more preferably 9 to 30 $\mu$m.

[Positive electrode active material layer]

The positive electrode active material layer contains a positive electrode active material, and may further contain a conductive aid and/or a binder, as needed.

(Positive electrode active material)

The positive electrode active material layer preferably contains a material capable of occluding and releasing lithium ions as a positive electrode active material. It is preferable that such a material be used since there is a tendency that high voltage and high energy density can be obtained.

Positive electrode active materials, for example,

include positive electrode active materials containing at least one transition metal element selected from the group consisting of Ni, Mn, and Co; and

is preferably at least one selected from lithium-containing metal oxides represented by general formula (a) below:

$$Li_pNi_qCo_rMn_sM_tO_u \ldots \quad (a)$$

wherein M is at least one metal selected from the group consisting of Al, Sn, In, Fe, V, Cu, Mg, Ti, Zn, Mo, Zr, Sr, and Ba; $0 < p < 1.3$; $0 < q < 1.2$; $0 < r < 1.2$; $0 \leq s < 0.5$; $0 \leq t < 0.3$; $0.7 \leq q + r + s + t \leq 1.2$; $1.8 < u < 2.2$; and p is a value determined by the charge and discharge states of the battery.

Examples of positive electrode active materials include

lithium cobalt oxides typified by $LiCoO_2$;
lithium manganese oxides typified by $LiMnO_2$, $LiMn_2O_4$, and $Li_2Mn_2O_4$;
lithium nickel oxides typified by $LiNiO_2$;
lithium-containing composite metal oxides represented by $Li_zMO_2$ (wherein M includes at least one transition metal element selected from the group consisting of Ni, Mn, and Co and represents two or more metal elements selected from the group consisting of Ni, Mn, Co, Al, and Mg, and z represents a number greater than 0.9 and less than 1.2) typified by $LiNi_{1/3}Co_{1/3}Mn_{1/3}O_2$, $LiNi_{0.5}Co_{0.2}Mn_{0.3}O_2$, $LiNi_{0.8}Co_{0.2}O_2$, $LiNi_{0.6}Co_{0.2}Mn_{0.2}O_2$, $LiNi_{0.75}Co_{0.15}Mn_{0.15}O_2$, $LiNi_{0.8}Co_{0.1}Mn_{0.1}O_2$, $LiNi_{0.85}Co_{0.075}Mn_{0.075}O_2$, $LiNi_{0.8}Co_{0.15}Al_{0.05}O_2$, $LiNi_{0.81}Co_{0.1}Al_{0.09}O_2$, and $LiNi_{0.85}Co_{0.1}Al_{0.05}O_2$;
metal oxides and metal chalcogenides having a tunnel structure and a layered structure, typified by $MnO_2$, $FeO_2$, $FeS_2$, $V_2O_5$, $V_6O_{13}$, $TiO_2$, $TiS_2$, $MoS_2$, and $NbSe_2$;
sulfur; and
conductive polymers typified by polyaniline, polythiophene, polyacetylene, and polypyrrole.

Particularly, it is preferable that the Ni content ratio q of the Li-containing metal oxide represented by the general formula (a) be $0.5 < q < 1.2$, since a decrease in use amount of the rare metal Co and a high energy density are both achieved.

The higher the Ni content ratio of the Li-containing metal oxide, the more the deterioration tends to progress at low voltage. Active sites that oxidize and deteriorate the nonaqueous electrolyte solution are present in the positive electrode active material of the lithium-containing metal oxide represented by the general formula (a), and these active sites may unintentionally consume the compounds added to protect the negative electrode on the positive electrode side.

The decomposition products of these additives that are incorporated and deposited on the positive electrode side not only increases internal resistance of the nonaqueous secondary battery, but also accelerate the deterioration of the lithium salt, and protection of the negative electrode surface also becomes insufficient. In order to deactivate the active sites that inherently cause the nonaqueous electrolyte solution to oxidize and deteriorate, controlling the Jahn-Teller distortions or coexisting with a component acting as a neutralizer is preferable. Therefore, the positive electrode active material preferably contains at least one metal selected from the group consisting of Al, Sn, In, Fe, V, Cu, Mg, Ti, Zn, Mo, Zr, Sr, and Ba.

For the same reason as above, the surface of the positive electrode active material is preferably coated with a compound containing at least one metal element selected from the group consisting of Zr, Ti, Al, and Nb. Further, the surface of the positive electrode active material is more preferably coated with an oxide containing at least one metal element selected from the group consisting of Zr, Ti, Al, and Nb. The surface of the positive electrode active material is even more preferably coated with at least one oxide selected from the group consisting of $ZrO_2$, $TiO_2$, $Al_2O_3$, $NbO_3$, and $LiNbO_2$, since permeation of lithium ions is not inhibited.

The positive electrode active material may be a lithium-containing compound other than the lithium-containing metal oxide represented the general formula (a). Examples of such lithium-containing compounds include composite oxides comprising lithium and a transition metal element, metal chalcogenides comprising lithium, metal phosphate compounds comprising lithium and a transition metal element, and metal silicate compounds comprising lithium and a transition metal element. From the viewpoint of obtaining a higher voltage, the lithium-containing compound is preferably a metal phosphate compound comprising, in particular, lithium and at least on transition metal element selected from the group consisting of Co, Ni, Mn, Fe, Cu, Zn, Cr, V, and Ti.

More specific examples of lithium-containing compounds include compounds represented by each of the following formula (XXa):

$$Li_vM^ID_2 \quad (XXa)$$

wherein D represents a chalcogen element; $M^I$ represents one or more transition metal elements comprising at least one transition metal element; and the value of v is determined by the charge and discharge states of the battery and is a number of 0.05 to 1.10,
the following formula (XXb):

$$Li_w M^{II} PO_4 \qquad (XXb)$$

wherein $M^{II}$ represents one or more transition metal elements; and the value of w is determined by the charge and discharge states of the battery and is a number of 0.05 to 1.10, and the following formula (XXc):

$$Li_t M^{III}_u SiO_4 \qquad (XXc)$$

wherein $M^{III}$ represents one or more transition metal elements; the value of t is determined by the charge and discharge states of the battery and is a number of 0.05 to 1.10; and u represents a number of 0 to 2.

The lithium-containing compound represented by the above formula (XXa) has a layered structure, and the compounds represented by the above formulas (XXb) and (XXc) have an olivine structure. These lithium-containing compounds may be compounds in which a portion of the transition metal element is substituted with Al, Mg, or another transition metal element, compounds in which such a metal element is contained in crystal grain boundaries, compounds in which a portion of oxygen atoms is substituted with fluorine atoms, or compounds in which at least a portion of the positive electrode active material surface is coated with another positive electrode active material, for the purpose of stabilizing the structures.

The positive electrode active materials are used alone or in combination of two or more. It is preferable that the positive electrode active material layer contain at least one transition metal element selected from Ni, Mn, and Co, since lithium ions can be reversibly and stably occluded and released and high energy density can be achieved.

When the lithium-containing compound and the additional positive electrode active material are used in combination as the positive electrode active material, the use ratio of the two components, as a use ratio of the lithium-containing compound relative to the entirety of the positive electrode active material, is preferably 80% by mass or greater, and more preferably 85% by mass or greater.

(Conductive aid)

Examples of conductive aids include graphite; carbon black typified by acetylene black and Ketjen black; and carbon fiber. The content of the conductive aid is preferably 1 part by mass to 20 parts by mass, and more preferably 2 parts by mass to 15 parts by mass as an amount per 100 parts by mass of the positive electrode active material.

When the content of the conductive aid is too high, volumetric energy density is deteriorated, and when the content is too low, formation of electron conduction paths is insufficient. Particularly, since the positive electrode active material layer has lower electron-conducting properties compared to the negative electrode active material layer, when the amount of conductive aid is insufficient, a predetermined battery capacity cannot be extracted when the nonaqueous secondary battery is charged or discharged at a high current value. Therefore, in applications that require high output and/or rapid charging, the content of the conductive aid is preferably increased to a range where reactions based on transfer of electrons are not rate-limiting.

(Binder)

Examples of binders include polyvinylidene fluoride (PVDF), polytetrafluoroethylene (PTFE), polyacrylic acid, carboxymethyl cellulose, styrene-butadiene rubber, and fluororubber. The content of the binder is preferably 6 parts by mass or less, and more preferably 0.5 to 4 parts by mass as an amount per 100 parts by mass of the positive electrode active material.

[Formation of positive electrode active material layer]

The positive electrode active material layer is formed by applying a positive electrode mixture-containing slurry in which a positive electrode mixture comprising a positive electrode active material, mixed with a conductive aid and/or a binder as needed, is dispersed in a solvent to a positive electrode current collector and drying (removing solvent), and pressing as needed. Any known solvent can be used as such as solvent. Examples include N-methyl-2-pyrrolidone, dimethylformamide, dimethylacetoamide, and water.

[Negative electrode]

The negative electrode in the nonaqueous secondary battery according to the present embodiment contains a material capable of occluding and releasing lithium ions, and may comprise a negative electrode active material layer on one side or both sides of a negative electrode current collector, as desired.

[Negative electrode current collector]

The negative electrode current collector, for example, is composed of a metal foil such as a copper foil, a nickel foil, or a stainless-steel foil. The negative electrode current collector may be subjected to carbon coating on the surface, or may be processed into a mesh form. The thickness of the negative electrode current collector is preferably 5 to 40 $\mu$m, more preferably 6 to 35 $\mu$m, and even more preferably 7 to 30 $\mu$m.

[Negative electrode active material layer]

The negative electrode active material layer contains a negative electrode active material, and may further contain a conductive aid and/or a binder, as needed.

(Negative electrode active material)

Examples of negative electrode active materials include, in addition to carbon materials typified by amorphous carbon (hard carbon and soft carbon); graphite such as artificial graphite and natural graphite; pyrolytic carbon, coke, glassy carbon, baked products of organic polymer compounds, mesocarbon microbeads, carbon fiber, activated carbon, carbon colloids, and carbon black, metallic lithium, metal oxides, metal nitrides, lithium alloys, tin alloys, Si materials, intermetallic compounds, organic compounds, inorganic compounds, metal complexes, and organic polymer compounds. The negative electrode active materials are used alone or in combination of two or more. Examples of the above silicon materials include silicon, Si alloys, and Si oxides.

From the viewpoint of increasing battery voltage, the negative electrode active material layer preferably contains a material, as the negative electrode active material, capable of occluding lithium ions at a potential lower than 0.4 V vs. Li/Li$^+$.

Even when a Si material is applied to the negative electrode active material, the nonaqueous electrolyte solution according to the present embodiment can advantageously suppress various deterioration phenomena associated with volume changes of the negative electrode when the charge-discharge cycle is repeated. Therefore, in a preferable aspect, a Si material, typified by a silicon alloy, is used as a negative electrode active material in the nonaqueous secondary battery according to the present embodiment, since excellent charge-discharge cycle characteristics are obtained while a high capacity derived from the Si material is provided.

In the present embodiment, a Si material, particularly SiO$_X$ (wherein $0.5 \leq x \leq 1.5$) may be contained as a negative electrode active material. The Si material may be in any form of a crystalline structure, a low-crystalline structure, or an amorphous structure. In addition, when using a Si material as a negative electrode active material, it is preferable that the active material surface be coated with a conductive material, since conductivity between active material particles is improved.

Silicon has an operating potential of about 0.5 V (vs Li/Li$^+$), which is slightly higher than the operating potential of graphite at about 0.05 V (vs Li/Li$^+$). Therefore, when a Si material is used, the risk of lithium electrodeposition is decreased. The acetonitrile used in the nonaqueous solvent in the present embodiment may reductively react with lithium metal and generate gas. Therefore, a negative electrode active material that is difficult for lithium electrodeposition is preferable when used in combination with a nonaqueous electrolyte solution comprising acetonitrile.

Since a negative electrode active material having an excessively high operating potential deteriorates the energy density of a battery, it is preferable that the negative electrode active material operate at a potential lower than 0.4 V vs. Li/Li$^+$, from the viewpoint of energy density improvement.

The content of the Si material is preferably in the range of 0.1% by mass or greater and 100% by mass or less, more preferably 1% by mass or greater and 80% by mass or less, and even more preferably 3% by mass or greater and 60% by mass or less as an amount per total amount of the negative electrode active material layer. By adjusting the content of the Si material within the above range, a balance of high capacity and charge-discharge cycle characteristics of the nonaqueous secondary battery can be ensured.

(Conductive aid)

Examples of conductive aids include graphite; carbon black typified by acetylene black and Ketjen black; and carbon fiber. The content of the conductive aid is preferably 20 parts by mass or less, and more preferably 0.1 to 10 parts by mass as an amount per 100 parts by mass of the negative electrode active material.

(Binder)

Examples of binders include carboxymethyl cellulose, polyvinylidene fluoride (PVDF), polytetrafluoroethylene (PTFE), polyacrylic acid, and fluororubber, and also include diene-based rubbers such as styrene-butadiene rubber. The content of the binder is preferably 10 parts by mass or less, and more preferably 0.5 to 6 parts by mass as an amount per 100 parts by mass of the negative electrode active material.

[Formation of negative electrode active material layer]

The negative electrode active material layer is formed by applying a negative electrode mixture-containing slurry in which a negative electrode mixture comprising a negative electrode active material, mixed with a conductive aid and/or a binder as needed, is dispersed in a solvent to a negative electrode current collector and drying (removing solvent), and pressing as needed. Any known solvent can be used as such a solvent. Examples include N-methyl-2-pyrrolidone, dimethylformamide, dimethylacetoamide, and water.

[Nonaqueous electrolyte solution]

In the present specification, a "nonaqueous electrolyte solution" (hereinafter, also simply referred to as "electrolyte solution") refers to an electrolyte solution of 1% by mass or less of water relative to the total amount of the electrolyte solution.
The electrolyte solution according to the present embodiment is used in
a nonaqueous secondary battery comprising a positive electrode containing one or more positive electrode active materials capable of occluding and releasing lithium ions, a negative electrode containing a material capable of occluding and releasing lithium ions, a nonaqueous electrolyte solution, and a separator.
The nonaqueous electrolyte solution comprises a nonaqueous solvent, a lithium salt, and an organic polymer, wherein

the nonaqueous solvent comprises 10% by volume or greater and 90% by volume or less of acetonitrile,
the lithium salt comprises a lithium-containing imide salt and is contained in an amount of 0.5 mol/L or more and 2 mol/L or less relative to the nonaqueous electrolyte solution,
the organic polymer has a viscosity average molecular weight of 30,000 or greater and 1,000,000 or less, and
the nonaqueous electrolyte solution has a viscosity at 25°C of 2 mPa·s or more and 500 mPa·s or less, an ionic conductivity of 13 mS/cm or more, and Z represented by formula (1) below:

$$Z = \text{viscosity (mPa·s) of electrolyte solution} \times \text{ionic conductivity (mS/cm) of electrolyte solution}$$
$$\cdots (1)$$

of 70 or greater.

According thereto, a nonaqueous electrolyte solution comprising acetonitrile capable of implementing the above nonaqueous secondary battery can be provided.
Z of 70 or greater in the formula (1) means that the viscosity at 25°C and ionic conductivity at 25°C are each within the ranges described above, a suitable value for viscosity is obtained, an a sufficiently high value for ionic conductivity is obtained. Such an electrolyte solution contributes to the implementation of the nonaqueous secondary battery according to the present embodiment.
Z represented by the formula (1) can be derived from the product of a value of "viscosity (mPa·s)" determined by the method described in the Examples and a value of "ionic conductivity (mS/cm)" determined by the method described in the Examples.
The electrolyte solution according to the present embodiment preferably comprises as little moisture as possible, but may contain a trace amount of moisture as long as achievement of the object of the present invention is not hindered. The content of such moisture is 300 ppm by mass, and even more preferably 200 ppm by mass relative to the total amount of the electrolyte solution. The electrolyte solution needs only to have a configuration for achieving the object of the present invention, and constituent materials of known electrolyte solutions used in lithium-ion batteries can be appropriately selected and applied as additional components.

The electrolyte solution according to the present embodiment can comprise acetonitrile, a nonaqueous solvent, a lithium salt, an electrode-protecting additive, a surfactant, and an organic polymer.

<Nonaqueous solvent>

In the present embodiment, a "nonaqueous solvent" refers to an element except the lithium salt and various additives from an electrolyte solution. When the electrolyte solution comprises an electrode-protecting additive, a "nonaqueous solvent" refers to an element except the lithium salt and additives other than the electrode-protecting additive from the electrolyte solution. Examples of nonaqueous solvents include alcohols such as methanol and ethanol; and aprotic solvents. Among these, an aprotic solvent is preferable as the nonaqueous solvent. The nonaqueous solvent may contain a solvent other than an aprotic solvent as long as achieving the object of the present invention is not hindered.

For example, the nonaqueous solvent according to the nonaqueous electrolyte solution can contain acetonitrile as an aprotic solvent. Since the ion-conducting properties of the electrolyte solution is improved by the nonaqueous solvent containing acetonitrile, diffusivity of lithium ions within the battery can be increased. Therefore, when the nonaqueous electrolyte solution contains acetonitrile, particularly even in a positive electrode in which the positive electrode active material layer is thickened to increase the filling amount of positive electrode active material, lithium ions can satisfactorily diffuse into regions near the current collector that are difficult for lithium ions to reach during discharge at high load. Thus, sufficient capacity can be drawn out even during highload discharge, and a nonaqueous secondary battery having excellent load characteristics can be obtained.

When the nonaqueous solvent contains acetonitrile, the rapid charging characteristics of the nonaqueous secondary battery can be enhanced. In constant current (CC)-constant voltage (CV) charging of a nonaqueous secondary battery, the capacity per unit time during CC charging period is larger than the charge capacity per unit time during CV charging period. When acetonitrile is used in the nonaqueous solvent of the electrolyte solution, in addition to increasing the region where CC charging can be carried out (lengthening CC charging time), since charging current can also be increased, the time from the start of charging to a fully charged state of the nonaqueous secondary battery can be significantly shortened.

Acetonitrile easily undergoes electrochemically reductive decomposition. Therefore, when acetonitrile is used, it is preferable that another solvent (for example, aprotic solvent other than acetonitrile) be used in combination with acetonitrile as the nonaqueous solvent and/or an electrode-protecting additive for forming a protective film on the electrode be added.

The content of acetonitrile may be 10% by volume or greater and 90% by volume or less as an amount per total amount of nonaqueous solvent. The content of acetonitrile is preferably 10% by volume or greater, more preferably 15% by volume or greater, more preferably 20% by volume or greater, more preferably 30% by volume or greater, and even more preferably 40% by volume or greater as an amount per total amount of nonaqueous solvent. This value is more preferably 85% by volume or less, and even more preferably 66% by volume or less. When the content of acetonitrile is 10% by volume or greater as an amount per total amount of nonaqueous solvent, there is a tendency that ionic conductivity is increased and high-output characteristics can be exhibited, and dissolution of the lithium salt can be further promoted. The additive describe below suppresses an increase in internal resistance of the battery, and thus when the content of acetonitrile in the nonaqueous solvent is within the above range, there is a tendency that high-temperature cycle characteristics and other battery characteristics can be further improved while maintaining excellent performance of acetonitrile. However, since the electrolyte solution more easily volatilizes as the content of acetonitrile is increased, the electrolyte solution amount may be insufficient in the process of manufacturing nonaqueous secondary batteries, adversely affecting battery characteristics. The addition of an organic polymer described below is advantageous in improving the issue of volatility.

Examples of aprotic solvents other than acetonitrile include cyclic carbonates, fluoroethylene carbonates, lactones, organic compounds comprising a sulfur atom, chain fluorinated carbonates, cyclic ethers, mononitriles other than acetonitrile, alkoxy-substituted nitriles, dinitriles, cyclic nitriles, short chain fatty acid esters, chain ethers, fluorinated ethers, ketones, and compounds in which some or all of the H atoms of an aprotic solvent are substituted with halogen atoms.

Examples of cyclic carbonates can include ethylene carbonate, propylene carbonate, 1,2-butylene carbonate, trans-2,3-butylene carbonate, cis-2,3-butylene carbonate, 1,2-pentylene carbonate, trans-2,3-pentylene carbonate, cis-2,3-pentylene carbonate, vinylene carbonate, 4,5-dimethylvinylene carbonate, and vinyl ethylene carbonate.

Examples of fluoroethylene carbonates can include 4-fluoro-1,3-dioxolan-2-one, 4,4-difluoro-1,3-dioxolan-2-one, cis-4,5-difluoro-1,3-dioxolan-2-one, trans-4,5-difluoro-1,3-dioxolan-2-one, 4,4,5-trifluoro-1,3-dioxolan-2-one, 4,4,5,5-tetrafluoro-1,3-dioxolan-2-one, and 4,4,5-trifluoro-5-methyl-1,3-dioxolan-2-one.

Examples of lactones can include γ-butyrolactone, α-methyl-γ-butyrolactone, γ-valerolactone, γ-caprolactone, δ-valerolactone, δ-caprolactone, and ε-caprolactone.

Examples of organic compounds comprising a sulfur atom can include ethylene sulfite, propylene sulfite, butylene sulfite, pentene sulfite, sulfolane, 3-sulfolene, 3-methylsulfolane, 1,3-propanesultone, 1,4-butanesultone, 1-propene 1,3-sultone, dimethylsulfoxide, tetramethylene sulfoxide, and ethylene glycol sulfite.

Examples of chain carbonates can include ethylene methyl carbonate, dimethyl carbonate, diethyl carbonate, methyl propyl carbonate, methyl isopropyl carbonate, dipropyl carbonate, methyl butyl carbonate, dibutyl carbonate, and ethyl propyl carbonate.

Examples of cyclic ethers can include tetrahydrofuran, 2-methyl tetrahydrofuran, 1,4-dioxane, and 1,3-dioxane.

Examples of mononitriles other than acetonitrile can include propionitrile, butyronitrile, valeronitrile, benzonitrile, and acrylonitrile.

Examples of alkoxy-substituted nitriles can include methoxyacetonitrile and 3-methoxypropionitrile.

Examples of dinitriles include malononitrile, succinonitrile, glutaronitrile, adiponitrile, 1,4-dicyanoheptane, 1,5-dicyanopentane, 1,6-dicyanohexane, 1,7-dicyanoheptane, 2,6-dicyanoheptane, 1,8-dicyanooctane, 2,7-dicyanooctane, 1,9-dicyanononane, 2,8-dicyanononane, 1,10-dicyanodecane, 1,6-dicyanodecane, and 2,4-dimethylglutaronitrile.

Examples of cyclic nitriles can include benzonitrile.

Examples of short chain fatty acid esters can include methyl acetate, methyl propionate, methyl isobutyrate, methyl butyrate, methyl isovalerate, methyl valerate, methyl pivalate, methyl hydroangelate, methyl caproate, ethyl acetate, ethyl propionate, ethyl isobutyrate, ethyl butyrate, ethyl isovalerate, ethyl valerate, ethyl pivalate, ethyl hydroangelate, ethyl caproate, propyl acetate, propyl propionate, propyl isobutyrate, propyl butyrate, propyl isovalerate, propyl valerate, propyl pivalate, propyl hydroangelate, propyl caproate, isopropyl acetate, isopropyl propionate, isopropyl isobutyrate, isopropyl butyrate, isopropyl isovalerate, isopropyl valerate, isopropyl pivalate, isopropyl hydroangelate, isopropyl caproate, butyl acetate, butyl propionate, butyl isobutyrate, butyl butyrate, butyl isovalerate, butyl valerate, butyl pivalate, butyl hydroangelate, butyl caproate, isobutyl acetate, isobutyl propionate, isobutyl isobutyrate, isobutyl butyrate, isobutyl isovalerate, isobutyl valerate, isobutyl pivalate, isobutyl hydroangelate, isobutyl caproate, tert-butyl acetate, tert-butyl propionate, tert-butyl isobutyrate, tert-butyl butyrate, tert-butyl isovalerate, tert-butyl valerate, tert-butyl pivalate, tert-butyl hydroangelate, and tert-butyl caproate.

Examples of chain ethers can include dimethoxyethane, diethyl ether, 1,3-dioxolane, diglyme, triglyme, and tetraglyme.

Examples of fluorinated ethers can include $Rf^{aa}$-$OR^{bb}$ (wherein $Rf^{aa}$ represents an alkyl group containing a fluorine atom, and $R^{bb}$ represents an organic group optionally containing a fluorine atom).

Examples of ketones can include acetone, methyl ethyl ketone, and methyl isobutyl ketone.

Examples of compounds in which some or all of the H atoms of an aprotic solvent are substituted with halogen atoms can include compounds in which the halogen atoms are fluorine.

Examples of fluorides of chain carbonates include methyl trifluoroethyl carbonate, trifluorodimethyl carbonate, trifluorodiethyl carbonate, trifluoroethyl methyl carbonate, methyl 2,2-difluoroethyl carbonate, methyl 2,2,2-trifluoroethyl carbonate, and methyl 2,2,3,3-tetrafluoropropyl carbonate. The above fluorinated chain carbonate can be represented by the following general formula:

$$R^{cc}\text{-}O\text{-}C(O)O\text{-}R^{dd}$$

wherein $R^{cc}$ and $R^{dd}$ are each at least one selected from the group consisting of $CH_3$, $CH_2CH_3$, $CH_2CH_2CH_3$, $CH(CH_3)_2$, and $CH_2Rf^{ee}$; $Rf^{ee}$ is an alkyl group having 1 to 3 carbon atoms in which hydrogen atoms are substituted with at least one fluorine atom; and $R^{cc}$ and/or $R^{dd}$ contains at least one fluorine atom.

Examples of fluorides of short chain fatty acid esters include fluorinated short chain fatty acid esters typified by 2,2-difluoroethyl acetate, 2,2,2-trifluoroethyl acetate, and 2,2,3,3-tetrafluoropropyl acetate. The fluorinated short chain fatty acid ester can be represented by the following general formula:

$$R^{ff}\text{-}C(O)O\text{-}R^{gg}$$

wherein $R^{ff}$ is at least one selected from the group consisting of $CH_3$, $CH_2CH_3$, $CH_2CH_2CH_3$, $CH(CH_3)_2$, $CF_3CF_2H$, $CFH_2$, $CF_2Rf^{hh}$, $CFHRf^{hh}$, and $CH_2Rf^{ii}$; $R^{gg}$ is at least one selected from the group consisting of $CH_3$, $CH_2CH_3$, $CH_2CH_2CH_3$, $CH(CH_3)_2$, and $CH_2Rf^{ii}$; $Rf^{hh}$ is an alkyl group having 1 to 3 carbon atoms in which hydrogen atoms may be substituted with at least one fluorine atom; $Rf^{ii}$ is an alkyl group having 1 to 3 carbon atoms in which hydrogen atoms are substituted with at least one fluorine atom; $R^{ff}$ and/or $R^{gg}$ contains at least one fluorine atom; and $R^{gg}$ is not $CH_3$ when $R^{ff}$ is $CF_2H$.

The aprotic solvents other than acetonitrile in the present embodiment can be used alone, or may be used in combination of two or more.

For the nonaqueous solvent in the present embodiment, it is preferable that one or more of a cyclic carbonate and a chain carbonate be used in combination with acetonitrile, from the viewpoint of improving stability of the nonaqueous electrolyte solution. From this point of view, for the nonaqueous solvent in the present embodiment, it is more preferable that a cyclic carbonate be used in combination with acetonitrile, and it is even more preferable that both of a cyclic carbonate and a chain carbonate be used in combination with acetonitrile.

When a cyclic carbonate is used with acetonitrile, it is particularly preferable that such cyclic carbonate comprise ethylene carbonate, vinylene carbonate, and/or fluoroethylene carbonate.

<Lithium salt>

The electrolyte solution according to the present embodiment comprises a lithium salt. The content of the lithium salt may be 0.5 mol/L or more and 2 mol/L or less relative to the electrolyte solution.

The lithium salt in the present embodiment comprises a lithium-containing imide salt as an imide salt. The lithium-containing imide salt is preferably an imide salt represented by $LiN(SO_2CmF_{2m+1})_2$ (wherein m is an integer of 0 to 8).

The lithium salt in the present embodiment may further comprise, in addition to the imide salt, one or more selected from a fluorine-containing inorganic lithium salt, an organic lithium salt, and other lithium salts.

(Imide salt)

Specifically, the imide salt preferably comprises at least one of $LiN(SO_2F)_2$ and $LiN(SO_2CH_3)_2$.

When acetonitrile is contained in the nonaqueous solvent, the lithium salt preferably comprises $LiPF_6$. Since the saturation concentration of the imide salt relative to acetonitrile is higher than the saturation concentration of $LiPF_6$, it is preferable that $LiPF_6$ and the imide salt be contained at a molar concentration where $LiPF_6 \leq$ imide salt, so that association and precipitation of the lithium salt and acetonitrile at low temperatures can be suppressed. Particularly, it is preferable that the imide salt and $LiPF_6$ be contained at a molar concentration where $LiPF_6$ < imide salt. The content of the imide salt is preferably 0.5 mol or more and 2.0 mol or less, and from the viewpoint of ensuring ion supply amount to the electrolyte solution according to the present embodiment, is particularly preferably 0.8 mol or more and 1.5 mol or less as an amount per L of nonaqueous solvent.

When the content of the lithium salt is within the above range, high ionic conductivity can be maintained. The ionic conductivity is preferably 13 mS/cm or more, more preferably 15 mS/cm or more, and from the viewpoint of maintaining output performance of the nonaqueous secondary battery according to the present embodiment, is preferably 18 mS/cm or more. The ionic conductivity, for example, may be 300 mS/cm or less, may be 150 mS/cm or less, or may be 75 mS/cm or less.

According to the acetonitrile-containing electrolyte solution comprising at least one of $LiN(SO_2F)_2$ and $LiN(SO_2CF_3)_2$, a decrease in ionic conductivity in a low-temperature region such as -10°C or -30°C can be effectively suppressed, and excellent low-temperature characteristics can be obtained.

By limiting the content of the imide salt and/or $LiPF_6$ as described above, an increase in resistance during high-temperature heating can also be more effectively suppressed.

(Fluorine-containing inorganic lithium salt)

The lithium salt in the present embodiment may include fluorine-containing inorganic lithium salts. A "fluorine-containing inorganic lithium salt" herein refers to a lithium salt that comprises no carbon atom in the anion, comprises a fluorine atom in the anion, and is soluble in acetonitrile. A fluorine-containing inorganic lithium salt is excellent in that the salt forms a passive film on the surface of the positive electrode current collector and suppresses corrosion of the positive electrode current collector.

Fluorine-containing inorganic lithium salts can include $LiPF_6$, $LiBF_4$, $LiAsF_6$, $Li_2SiF_6$, $LiSbF_6$, and $Li_2B_{12}F_bH_{12-b}$ (wherein b is an integer of 0 to 3), and one or more selected therefrom can be used.

As the fluorine-containing inorganic lithium salt, compounds that are double salts of LiF and a Lewis acid are desirable, and among these, fluorine-containing inorganic salts comprising a phosphorus atom are more preferably used since the release of free fluorine atoms is facilitated. A typical fluorine-containing inorganic lithium salt is $LiPF_6$, which releases a $PF_6$ anion when dissolved. It is preferable that a fluorine-containing inorganic lithium salt comprising a boron atom be used as the fluorine-containing inorganic lithium salt, since trapping of excess free acid components that may cause battery deterioration is facilitated. From such a viewpoint, $LiBF_4$ is preferable.

The content of the fluorine-containing inorganic lithium salt in the electrolyte solution according to the present embodiment is preferably 0.01 mol or more, more preferably 0.1 mol or more, and even more preferably 0.25 mol or more as an amount per L of nonaqueous solvent. When the content of the fluorine-containing inorganic lithium salt is within the above range, there is a tendency that ionic conductivity is increased and high-output characteristics can be exhibited. The content of the fluorine-containing inorganic lithium salt is preferably 2.8 mol or less, more preferably 1.5 mol or less, and even more preferably 1.0 mol or less as an amount per L of nonaqueous solvent. When the content of the fluorine-containing inorganic lithium salt is within the above range, there is a tendency that ionic conductivity is increased, high-output characteristics can be exhibited, and a decrease in ionic conductivity due to an increase in viscosity at low temperatures can be suppressed, and there is a tendency that high-temperature cycle characteristics and other battery characteristics can be further improved while maintaining excellent performance of the electrolyte solution.

The content of the fluorine-containing inorganic lithium salt in the electrolyte solution according to the present embodiment, for example, may be 0.05 mol or more and 1.0 mol or less as an amount per L of nonaqueous solvent.

(Organic lithium salt)

The lithium salt in the present embodiment may include organic lithium salts. An "organic lithium salt" refers to a lithium salt that comprises a carbon atom in the anion and is soluble in acetonitrile, other than the imide salt.

Examples of organic lithium salts can include organic lithium salts having an oxalate group. Specific examples of organic lithium salts having an oxalate group include organic lithium salts represented by each of $LiB(C_2O_4)_2$, $LiBF_2(C_2O_4)$, $LiPF_4(C_2O_4)$, and $LiPF_2(C_2O_4)_2$. Among these, at least one lithium salt selected from lithium salts represented by $LiB(C_2O_4)_2$ and $LiBF_2(C_2O_4)$ is preferable. It is more preferable that one or more of these lithium salts be used together with a fluorine-containing inorganic lithium salt. The organic lithium salt having an oxalate group may be contained in the negative electrode (negative electrode active material layer), in addition to being added to the electrolyte solution.

The addition amount of the organic lithium salt to the electrolyte solution in the present embodiment, from the viewpoint of more satisfactorily ensuring the effect of the use thereof, is preferably 0.005 mol or more, more preferably 0.01 mol or more, even more preferably 0.02 mol or more, and particularly preferably 0.05 mol or more as an amount per L of nonaqueous solvent. However, there is a risk of precipitation when the amount of an organic lithium salt having an oxalate group in the electrolyte solution is too large. Thus, the addition amount of the organic lithium salt having an oxalate group to the electrolyte solution is preferably less than 1.0 mol, more preferably less than 0.5 mol, and even more preferably less than 0.2 mol as an amount per L of nonaqueous solvent.

It is known that organic lithium salts having an oxalate group are poorly soluble in lowpolarity organic solvents, particularly in chain carbonates. The content of the organic lithium salt in the electrolyte solution according to the present embodiment, for example, may be 0.01 mol or more and 0.5 mol or less as an amount per L of nonaqueous solvent.

The organic lithium salt having an oxalate group may contain a trace amount of lithium oxalate, and when mixed as an electrolyte solution, may react with a trace amount of moisture contained in another raw material to newly generate a white precipitate of lithium oxalate. Therefore, the content of lithium oxalate in the electrolyte solution according to the present embodiment is preferably suppressed to the range of 500 ppm or less.

(Additional lithium salt)

The lithium salt in the present embodiment may comprise additional lithium salts other than those described above.

Specific examples of additional lithium salts include

inorganic lithium salts comprising no fluorine atom in the anion, such as $LiClO_4$, $LiAlO_4$, $LiAlCl_4$, $LiB_{10}Cl_{10}$, and Li chloroborane;

organic lithium salts such as $LiCF_3SO_3$, $LiCF_3CO_2$, $Li_2C_2F_4(SO_3)_2$, $LiC(CF_3SO_2)_3$, $LiCnF_{(2n+1)}SO_3$ (wherein $n \leq 2$), lower aliphatic carboxylic acid Li, Li tetraphenylborate, and $LiB(C_3O_4H_2)_2$;

organic lithium salts represented by $LiPF_n(CpF_{2p+1})_{6-n}$ (wherein n is an integer of 1 to 5 and p is an integer of 1 to 8) such as $LiPF_5(CF_3)$;

organic lithium salts represented by $LiBF_q(C_2F_{2s+1})_{4-q}$ (wherein q is an integer of 1 to 3 and s is an integer of 1 to 8) such as $LiBF_3(CF_3)$;

lithium salts bonded to a polyvalent anion; and

organic lithium salts represented by each of

formula (YYa) below:

$$LiC(SO_2R^{jj})(SO_2R^{kk})(SO_2R^{ll}) \qquad (YYa)$$

wherein $R^{jj}$, $R^{kk}$, and $R^{ll}$ may be the same as or different from each other, and represent a perfluoroalkyl group having 1 to 8 carbon atoms,

formula (YYb) below:

$$LiN(SO_2OR^{mm})(SO_2OR^{nn}) \qquad (YYb)$$

wherein $R^{mm}$ and $R^{nn}$ may be the same as or different from each other, and represent a perfluoroalkyl group having 1 to 8 carbon atoms, and

formula (YYc) below:

$$LiN(SO_2R^{oo})(SO_2R^{pp}) \qquad (YYc)$$

wherein $R^{oo}$ and $R^{pp}$ may be the same as or different from each other, and represent a perfluoroalkyl group having 1 to 8 carbon atoms. One or more of these lithium salts can be used together with the fluorine-containing inorganic lithium salt.

The addition amount of the additional lithium salt to the electrolyte solution, for example, may be appropriately set to the range of 0.01 mol or more and 0.5 mol or less as an amount per L of nonaqueous solvent.

<Electrode-protecting additive>

The electrolyte solution according to the present embodiment may comprise an additive for protecting an electrode (electrode-protecting additive). The electrode-protecting additive may substantially overlap with the substances acting as solvents for dissolving lithium salts (i.e., nonaqueous solvents described above). The electrode-protecting additive is preferably a substance that contributes to performance improvement of the electrolyte solution and nonaqueous secondary battery, and also encompasses substances not directly involved in the electrochemical reactions.

Specific examples of electrode-protecting additives include

fluoroethylene carbonates typified by 4-fluoro-1,3-dioxolan-2-one, 4,4-difluoro-1,3-dioxolan-2-one, cis-4,5-difluoro-1,3-dioxolan-2-one, trans-4,5-difluoro-1,3-dioxolan-2-one, 4,4,5-trifluoro-1,3-dioxolan-2-one, 4,4,5,5-tetrafluoro-1,3-dioxolan-2-one, and 4,4,5-trifluoro-5-methyl-1,3-dioxolan-2-one;

unsaturated bond-containing cyclic carbonates typified by vinylene carbonate, 4,5-dimethylvinylene carbonate, and vinyl ethylene carbonate;

lactones typified by $\gamma$-butyrolactone, $\gamma$-valerolactone, $\gamma$-caprolactone, $\delta$-valerolactone, $\delta$-caprolactone, and $\varepsilon$-caprolactone;

cyclic ethers typified by 1,4-dioxane; and

cyclic sulfur compounds typified by ethylene sulfite, propylene sulfite, butylene sulfite, pentene sulfite, sulfolane, 3-sulfolene, 3-methylsulfolane, 1,3-propanesultone, 1,4-butanesultone, 1-propene 1,3-sultone, and tetramethylene sulfoxide. These additives are used alone or in combination of two or more.

The content of the electrode-protecting additive in the electrolyte solution is preferably 0.1 to 30% by volume, more preferably 0.3 to 15% by volume, and particularly preferably 0.4 to 10% by volume as an amount per total amount of nonaqueous solvent.

In the present embodiment, the higher the content of the electrode-protecting additive, the more the deterioration of the electrolyte solution is suppressed. However, the lower the content of the electrode-protecting additive, the more the high-output characteristics of the nonaqueous secondary battery in low-temperature environment is improved. Therefore, by adjusting the content of the electrode-protecting additive within the above range, there is a tendency that excellent performance based on high ionic conductivity of the electrolyte solution can be exhibited without impairing basic functions of the nonaqueous secondary battery. By preparing the electrolyte solution with such a composition, there is a tendency that the cycle performance, high-output performance in low-temperature environment, and other battery characteristics of the nonaqueous secondary battery can be further improved.

Acetonitrile easily undergoes electrochemically reductive decomposition. Therefore, the nonaqueous solvent comprising acetonitrile, as an electrode-protecting additive for forming a protective film on the negative electrode, preferably comprises one or more cyclic aprotic polar solvents, and more preferably comprises one or more unsaturated bond-containing cyclic carbonates.

The unsaturated bond-containing cyclic carbonate is preferably vinylene carbonate, and the content of vinylene carbonate is preferably 0.1% by volume or greater and 10% by volume or less, more preferably 0.2% by volume or greater and less than 8% by volume, and even more preferably 0.5% by volume or greater and less than 6% by volume in the electrolyte solution, whereby it is possible to more effectively improve low-temperature durability and provide a secondary battery having excellent low-temperature performance.

Vinylene carbonate as an electrode-protecting additive suppresses reductive decomposition reactions of acetonitrile on the negative electrode surface. However, excessive film formation leads to a decrease in low-temperature performance. Thus, by adjusting the addition amount of vinylene carbonate within the above range, interfacial (film) resistance can be kept low, and cycle deterioration at low temperatures can be suppressed.

<Acid anhydride>

The nonaqueous secondary battery according to the present embodiment is stabilized by the electrolyte solution partially decomposing during the initial charge and forming SEI on the negative electrode surface. To strengthen the SEI more effectively, an acid anhydride can be added. When acetonitrile is contained as a nonaqueous solvent, the strength of the SEI tends to decrease as the temperature increases, but the addition of an acid anhydride promotes the strengthening of the SEI. Thus, by using such an acid anhydride, an increase in internal resistance over time due to thermal history can be effectively suppressed.

Specific examples of acid anhydrides include chain acid anhydrides typified by acetic anhydride, propionic anhydride, and benzoic anhydride; cyclic acid anhydrides such as malonic anhydride, succinic anhydride, glutaric anhydride, maleic anhydride, phthalic anhydride, 1,2-cyclohexanedicarboxylic anhydride, 2,3-naphthalene dicarboxylic anhydride, and naphthalene-1,4,5,8-tetracarboxylic dianhydride; and mixed acid anhydrides having a structure in which two different carboxylic acids or different acids such as a carboxylic acid and a sulfonic acid are condensed by dehydration. These acid anhydrides are used alone or in combination of two or more.

In the nonaqueous secondary battery according to the present embodiment, the SEI is preferably strengthened before the reductive decomposition of the nonaqueous solvent. Thus, the acid anhydride preferably comprises at least one cyclic acid anhydride that takes effect early during the initial charge. Only one or a plurality of these cyclic acid anhydrides may be contained, or a cyclic acid anhydride other than these cyclic acid anhydrides may be contained. Further, the cyclic acid anhydride preferably includes at least one of succinic anhydride, maleic anhydride, and phthalic anhydride.

An electrolyte solution comprising at least one of succinic anhydride, maleic anhydride, and phthalic anhydride can form a strong SEI on the negative electrode and more effectively suppress an increase in resistance during high-temperature heating. Particularly, it is preferable that succinic anhydride be contained, whereby a strong SEI can be formed on the negative electrode while suppressing side reactions.

When the electrolyte solution according to the present embodiment contains an acid anhydride, the content thereof is preferably in the range of 0.01 parts by mass or more and 10 parts by mass or less, more preferably 0.05 parts by mass or more and 1 part by mass or less, and even more preferably 0.1 parts by mass or more and 0.5 parts by mass or less as an amount per 100 parts by mass of the electrolyte solution.

< Optional additive>

In the present embodiment, for the purpose of improvement of charge-discharge cycle characteristics, high-temperature storage properties, and improvement of safety (for example, overcharge prevention) of the nonaqueous secondary battery, the electrolyte solution can appropriately contain an optional additive (additive other than acid anhydride and electrode-protecting additive).

Examples of optional additives include sulfonic acid esters, diphenyl disulfide, cyclohexylbenzene, biphenyl, fluorobenzene, tert-butylbenzene, and nitrogen-containing cyclic compounds with no steric hindrance around the lone pair of electrons (such as pyridine, 1-methyl-1H-benzotriazole, and 1-methylpyrazole). Particularly, phosphoric acid esters have an effect of suppressing side reactions during storage, and are effective as an optional additive.

When the electrolyte solution according to the present embodiment contains an additional optional additive, the content thereof is preferably in the range of 0.01% by mass or greater and 10% by mass or less, more preferably 0.02% by mass or greater and 5% by mass or less, and even more preferably 0.05% to 3% by mass as an amount per total amount of electrolyte solution. By adjusting the content of the additional optional additive within the above range, there is a tendency that even more favorable battery characteristics can be imparted without impairing basic functions of the nonaqueous secondary battery.

<Surfactant>

The electrolyte solution of the present embodiment can comprise a surfactant. In the present embodiment, a surfactant is a compound having one or more hydrophilic groups and one or more lipophilic groups per molecule. The surfactant includes anionic surfactants, cationic surfactants, amphoteric surfactants, and nonionic surfactants. Ionizing surfactants are limited to those that do not inhibit intercalation and deintercalation of lithium ions into and from the negative electrode. From the viewpoint of solubility of the electrolyte solution, the surfactant is preferably a nonionic surfactant.

Examples of nonionic surfactants include fatty acid ester compounds such as glycerin fatty acid ester, sorbitan fatty acid ester, sucrose fatty acid ester, and saturated fatty acid ester; phosphoric acid ester compounds such as ethyl diethyl phosphonoacetate {EDPA; $(C_2H_5O)_2(P=O)\text{-}CH_2(C=O)OC_2H_5$}, tris(trifluoroethyl) phosphate {TFEP; $(CF_3CH_2O)_3P=O$}, triphenyl phosphate {TPP; $(C_6H_5O)_3P=O$}, triallyl phosphate {$(CH_2=CHCH_2O)_3P=O$}, triamyl phosphate, tris(2-butoxyethyl) phosphate, and tris(2-ethylhexyl) phosphate; ether compounds such as polyoxyethylene alkyl ether, polyoxyalkylene alkyl ether, polyoxyethylene alkyl phenyl ether, polyoxyethylene polycyclic phenyl ether, polyoxyethylene distyrenated phenyl ether, and polyoxyethylene polyoxypropylene glycol; ester ether compounds such as fatty acid polyethylene glycol and polyoxyethylene sorbitan fatty acid ester; and alkanolamide compounds such as fatty acid alkanolamide. From the viewpoint of improving stability of the electrolyte solution, a fatty acid ester compound or a phosphoric acid ester compound is preferable. As the fatty acid ester compound, ethyl laurate is preferable. Particularly, phosphoric acid ester compounds are preferable, and among these, at least one selected from the group consisting of triamyl phosphate, tris(2-butoxyethyl) phosphate, and tris(2-ethylhexyl) phosphate is more preferable, and tris(2-ethylhexyl) phosphate is particularly preferable.

The number of carbon atoms contained in at least one substituent constituting the hydrophobic portion of the nonionic surfactant is preferably 3 or greater, more preferably 5 or greater, and even more preferably 8 or greater, from the viewpoint of lowering surface tension of the electrolyte solution. From the viewpoint that compounds having a large number of carbon atoms in a substituent have a high boiling point and are difficult to purify, the number of carbon atoms contained in the substituent is preferably 25 or less, and more preferably 20 or less. When the hydrocarbon chain of the substituent is branched, the total number of carbon atoms contained in the substituent is used. Specifically, examples of substituents having 3 or more carbon atoms include a propyl group, an isopropyl group, a butyl group, an isobutyl group, a s-butyl group, a t-butyl group, an amyl group, an isoamyl group, a s-amyl group, a t-amyl group, a 2-butoxyethyl group, a 2-ethylhexyl group, and a phenyl group.

In the present embodiment, the content of the surfactant is 0.1% by mass or greater and 3% by mass or less relative to the total amount of the electrolyte solution. The content of the surfactant is more preferably 0.3% by mass or greater from the viewpoint of improving impregnation properties, and is more preferably 2% by mass or less from the viewpoint of maintaining high ionic conductivity. Likewise, the content of the nonionic surfactant is preferably 0.1% by mass or greater and 3% by mass or less, and more preferably 0.3% by mass or greater and 2% by mass or less relative to the total amount of the electrolyte solution. When the content of the surfactant or nonionic surfactant is 0.1% by mass or greater, the suppression effect on output deterioration can be more effectively obtained, and when the content is 3% by mass or less, the decrease in ionic conductivity is small and the effect on battery characteristics such as input/output characteristics and battery life is smaller.

The content of the surfactant can be determined by $^1$H-NMR measurement (normalizing to a reference substance ($C_6F_4H_2$) and calculating the content of the surfactant from an integrated value of the signals of each detected component) of the electrolyte solution at room temperature.

As a result of intensive studies by the inventors, it was found that when the surfactant comprises a hydroxyl group, the impregnation properties of the separator are improved, but reductive decomposition easily occurs in the negative electrode during charging and causes battery performance to deteriorate. Further, it was newly found that when the surfactant comprises a hydroxyl group, bubbles are easily generated in a reduced-pressure step after injecting the electrolyte solution. When an initial charge is carried out in a state where the bubbles are not completely removed, a SEI is not uniformly formed on the negative electrode surface, leading to initial charge-discharge failure. The electrolyte solution comprising acetonitrile enables subsequent charge-discharge operations through the uniform formation of SEI during the initial charge. Thus, when there is a portion where SEI formation during the initial charge is insufficient due to bubble generation, the electrolyte solution comprising acetonitrile is directly linked to an initial charge failure or a deterioration in battery life, compared to an electrolyte solution comprising no acetonitrile. Therefore, it is important that the surfactant in the present embodiment does not comprise a hydroxyl group as a substituent, more specifically a terminal substituent.

< Organic polymer>

The electrolyte solution according to the present embodiment can contain an organic polymer from the viewpoint of preventing volatilization of the electrolyte solution. Organic polymers are limited to those that do not excessively inhibit intercalation and deintercalation of lithium ions into and from the negative electrode. From the viewpoint of solubility of the electrolyte solution, the organic polymer preferably has at least one of the structures of a polyether structure and an ester structure.

Examples of organic polymers having a polyether structure include polyethylene oxide, polypropylene oxide, polyethylene glycol monododecyl ether, polyethylene glycol mono-4-nonylphenyl ether, polyethylene glycol monooleyl ether, polyethylene glycol monocetyl ether, poly(ethylene glycol) methacrylate, poly(ethylene glycol) diacrylate, poly(ethylene glycol) distearate, O-[(N-succinimidyl)succinyl-aminoethyl]-O'-methylpolyethylene glycol, O-[2-(3-mercaptopropionylamino)ethyl]-O'-methylpolyethylene glycol, poly(ethylene glycol) bis(3-aminopropyl), poly(ethylene glycol) methyl ether, methoxypolyethylene epoxide, poly(ethylene glycol) bis(carboxymethyl) ether, poly(ethylene glycol) dimethyl ether, poly(ethylene glycol) bis(amine), and poly(ethylene glycol) methyl ether acetylene. Examples of organic polymers having an ester structure include poly(methyl methacrylate), poly(ethyl methacrylate), poly(isopropyl methacrylate), poly(tert-butyl acrylate), isobutyl methacrylate (polymer), and poly(ethylene glycol) monomethyl ether monomethacrylate. These organic polymers are used alone or in combination of two or more. For example, the organic polymer may comprise at least one of polyethylene oxide and poly(methyl methacrylate). The organic polymer may also have a branched structure such as a multi-branched structure, and a copolymer such as a block copolymer or a random copolymer may be used.

The content of the organic polymer can be 0.1% by mass or more and 10% by mass or less relative to the total amount of the electrolyte solution. From the viewpoint of improving volatility, the content is preferably 0.3% by mass or greater, and more preferably 0.5% by mass or greater. From the viewpoint of suppressing a deterioration in impregnation properties, the content is preferably 6% by mass or less, and more preferably 3% by mass or less.

The viscosity average molecular weight of the organic polymer is 30000 or greater and 1,000,000 or less. The viscosity average molecular weight may be 40000 or greater, may be 70000 or greater, or may be 90000 or greater, and from the viewpoint of suppressing a deterioration in impregnation properties, is preferably 800000 or less, and more preferably 650000 or less.

When the content and viscosity average molecular weight of the organic polymer are within the above ranges, the viscosity of the electrolyte solution is increased, and high ionic conductivity is easily maintained. By increasing the viscosity of the electrolyte solution, fluidity of the electrolyte solution is easily lowered, and therefore the heat transfer rate and the diffusion rate within the liquid phase are easily suppressed. From the viewpoint of suppressing volatility within the steps of producing nonaqueous secondary batteries, the viscosity at 25°C is preferably 2 mPa•s or more, more preferably 3 mPa•s or more, and even more preferably 4 mPa•s or more. From the viewpoint of suppressing a deterioration in infusibility into the electrodes and separator, the viscosity is preferably 500 mPa•s or less, preferably 200 mPa•s or less, and even more preferably 100 mPa•s or less. From the viewpoint of maintaining output performance of the nonaqueous secondary battery, ionic conductivity at 25°C is preferably 13 mS/cm or more, more preferably 15 mS/cm or more, and even more preferably 18 mS/cm or more.

<Separator>

The separator in the present embodiment refers to a member that is arranged between a plurality of electrodes in a power storage device and has ion permeability and, if necessary, shutdown characteristics. The separator comprises a microporous membrane and/or a microporous layered membrane, and may further comprise optional functional layers as desired.

The separator is required to have insulation properties and ion permeability, and is thus generally formed from an insulating material having a porous structure, such as paper, a polyolefin nonwoven fabric, or a resin microporous membrane. Particularly, when the separator is used in an electrolyte solution secondary battery comprising positive and negative electrodes capable of occluding and releasing lithium ions and an electrolyte solution composed of an electrolyte dissolved in a nonaqueous solvent, a polyolefin microporous membrane that can provide the separator with oxidation-reduction deterioration resistance and a dense and uniform structure is excellent as a separator substrate. Therefore, the separator according to the present embodiment can comprise a polyolefin microporous membrane.

The separator in the present embodiment is a microporous membrane comprising at least one of polyethylene and polypropylene, and may comprise a porous layer comprising an inorganic filler on one side or both sides of the microporous membrane.

In the present embodiment, examples of polyolefin resins used as the substrate material include homopolymers such as polyethylene and polypropylene, copolymers of a plurality of monomers constituting each homopolymer, and mixtures of these polymers. Examples of polyethylene include low-density, medium-density, and high-density polyethylenes. From the viewpoint of puncture strength and mechanical strength, a high-density polyethylene is preferable. In addition, two or more of these polyethylenes may be mixed for the purpose of imparting flexibility. The polymerization catalyst used when manufacturing these polyethylenes is not particularly limited, and examples include Ziegler-Natta catalysts, Phillips catalysts, and metallocene catalysts. From the viewpoint of achieving both high mechanical strength and high permeability, the viscosity average molecular weight of the polyethylene is preferably 100,000 or greater and 12,000,000 or less, and more preferably 200,000 or greater and 3,000,000 or less.

The microporous membrane according to the present embodiment may be a microporous layered membrane, as desired. A microporous layered membrane means a multilayer membrane in which a plurality of polyolefin-based microporous layers are layered or a composite microporous membrane in which a polyolefin-based microporous membrane and a microporous membrane comprising another resin, and may simply be called a laminated body hereinafter.

The method of producing a substrate comprising a polyolefin-based resin as a main component may be a known method. Examples of such a production method include dry production methods and wet production methods.

In a dry production method, for example, a polyolefin-based resin such as polypropylene or polyethylene is first melt-extruded to form a film. The film is then annealed at low temperature to grow crystalline domains, and stretched in this state to elongate the amorphous regions to form a microporous membrane as a substrate.

In a wet production method, for example, a hydrocarbon solvent, an additional low-molecular material, and a polyolefin-based resin such as polypropylene and polyethylene are mixed and then formed into a film form. The solvent and the low-molecular material are subsequently removed from the film in which the solvent and the low-molecular material have aggregated in the amorphous phase and begun to form island phases, using another easily volatilized solvent, to form a microporous membrane as a substrate.

A porous layer comprising an inorganic filler may be arranged on at least one side of the substrate used in the present embodiment for the purpose of controlling strength, hardness, and thermal shrinkage. The porous layer may further comprise an organic filler and a fibrous compound.

The inorganic filler is not particularly limited, and is preferably one that has high thermal resistance and electrical insulation properties and is electrochemically stable in the use range of lithium-ion secondary batteries. Examples of inorganic fillers include aluminum compounds, magnesium compounds, and other compounds. Examples of aluminum compounds include aluminum oxide, aluminum silicate, aluminum hydroxide, aluminum hydroxide oxide, sodium aluminate, aluminum sulfate, aluminum phosphate, and hydrotalcite. Examples of magnesium compounds include magnesium sulfate and magnesium hydroxide. Examples of other compounds include oxide-based ceramics, nitride-based ceramics, clay minerals, silicon carbide, calcium carbonate, barium titanate, asbestos, zeolite, calcium silicate, magnesium silicate, diatomite, silica sand, and glass fiber. Examples of oxide-based ceramics include silica, titania, zirconia, magnesia, ceria, yttria, zinc oxide, and iron oxides. Examples of nitride-based ceramics include silicon nitride, titanium nitride, and boron nitride. Examples of clay minerals include talc, montmorillonite, sericite, mica, amesite, and bentonite. These inorganic fillers may be used alone, or a plurality thereof may be used in combination.

Among the above, from the viewpoint of electrochemical stability and thermal resistance characteristics, at least one selected from the group consisting of aluminum oxide, aluminum hydroxide oxide, and aluminum silicate is preferable. Specific examples of aluminum oxides include alumina. Specific examples of aluminum hydroxide oxide include boehmite. Specific examples of aluminum silicate include kaolinite, dickite, nacrite, halloysite, and pyrophyllite.

The substrate used in the present embodiment may be of a multilayer structure in which the above substrates are stacked, for the purpose of enhancing tear strength and puncture strength. Specific examples include laminated bodies of a polyethylene microporous membrane and a polypropylene microporous membrane and laminated bodies of a nonwoven fabric and a polyolefin-based microporous membrane.

The porosity of the substrate or the separator, from the viewpoint of improving mechanical strength thereof and enhancing performance of a power storage device, is preferably 20% or greater and more preferably 35% or greater as a lower limit, and preferably 90% or less and more preferably 80% or less as an upper limit. It is preferable that the porosity be 20% or greater from the viewpoint of ensuring superior separator permeability. It is preferable that the porosity be 90% or less from the viewpoint of ensuring superior puncture strength.

From the same viewpoint, the air permeability (hereinafter, also referred to as "air permeability resistance") of the substrate or the separator is not particularly limited, but from the viewpoint of enhancing performance of a nonaqueous secondary battery, is preferably 20 sec/100 cm$^3$ or more and more preferably 50 sec/100 cm$^3$ or more as a lower limit, and is preferably 500 sec/100 cm$^3$ or less and more preferably 300 sec/100 cm$^3$ or less as an upper limit. It is preferable that the air permeability be 10 sec/100 cm$^3$ or more from the viewpoint of further suppressing selfdischarge of the nonaqueous secondary battery. It is preferable that the air permeability be 1000 sec/100 cm$^3$ from the viewpoint of obtaining more favorable charge-discharge characteristics. The air permeability and porosity are measured according to the methods described in the Examples.

The puncture strength of the substrate, from the viewpoint of improving dependability of the separator and the viewpoint of suppressing thermal shrinkage, is preferably 200 g/20 $\mu$m or more and more preferably 300 g/20 $\mu$m or more as a lower limit, and preferably 2000 g/20 $\mu$m or less and more preferably 1000 g/20 $\mu$m or less as an upper limit. It is preferable that the puncture strength be 200 g/20 $\mu$m or more from the viewpoint of further suppressing membrane rupture due to active material falling off during battery winding, and also from the viewpoint of further suppressing the risk of short circuits due to expansion and contraction of the electrodes during charging and discharging. It is preferable that the puncture strength be 2000 g/20 $\mu$m or less from the viewpoint that width shrinkage due to orientation relaxation during heating can be further decreased.

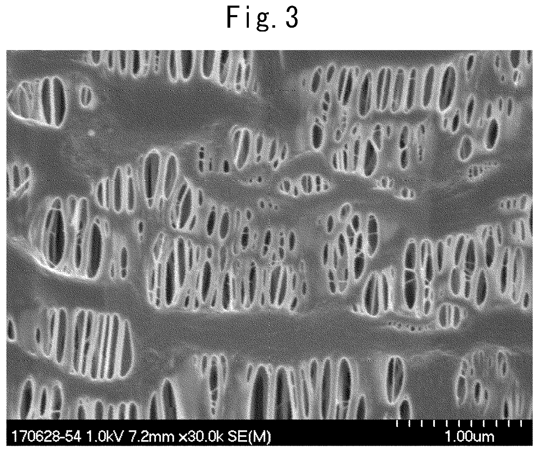

The polypropylene-based microporous membrane according to the present embodiment has polymer matrices comprising polypropylene extending along one direction perpendicular to membrane thickness, and comprises fibrils comprising polypropylene between the polymer matrices and micropores between a plurality of the fibrils. The above "one direction perpendicular to membrane thickness" means the mechanical direction (hereinafter, may be abbreviated as MD) of microporous membrane continuous molding. The structure of the polypropylene-based microporous membrane is obtained by a dry method, and more specifically, can be obtained by a dry method comprising a step of dry-porosifying a polypropylene-containing resin molded body. FIG. 3 shows one example of a SEM image of a polypropylene microporous membrane. For example, a polypropylene-containing polymer matrix structure extending along the above "one direction perpendicular to membrane thickness" can be observed from FIG. 3.

A microporous membrane is a single-layer membrane consisting of a single polyolefin-based microporous layer, or a microporous single-layer membrane consisting of a resin layer other than a polyolefin-based microporous layer, or a composite microporous single-layer membrane comprising a polyolefin-based resin and another resin, and may also be called a microporous layer.

The polyolefin-based microporous membrane is formed from a polyolefin resin composition comprising a polyolefin resin as a main component.

The polypropylene-based microporous membrane is formed from a polypropylene resin composition comprising polypropylene as a main component.

In the present specification, a membrane comprising a specific material as a main component means comprising 50% or greater of the material based on the mass of the membrane.

In the present specification, a microporous membrane comprising a polyolefin resin as a main component means that the ratio of the polyolefin resin in the microporous membrane is 50% by mass or greater relative to the mass of the microporous membrane. Therefore, the polyolefin resin can form a polymer network in the microporous membrane.

A polypropylene resin composition comprising polypropylene as a main component means that the ratio of polypropylene in the polypropylene resin composition is 50% by mass or greater relative to the mass of the polypropylene resin composition.

The present inventors have discovered that when a polypropylene-based microporous membrane and an electrolyte solution comprising acetonitrile are combined, electrolyte solution volatility is particularly an issue. As a result of intensive studies regarding this issue, it was found that among polypropylene-based separators having a small pore size, when a separator manufactured by a dry method and having a pore structure parallel to the thickness direction is used, impregnation properties of the electrolyte solution comprising acetonitrile are extremely low. Therefore, the electrolyte solution volatilizes before infusing into the separator. Particularly, during battery manufacturing, it is necessary to lengthen the time in a reduced-pressure step in order to sufficiently impregnate the electrolyte solution into the separator. As a result, it was newly found that a low-boiling-point solvent in the electrolyte solution volatilizes, causing initial failures.

For the polypropylene-based microporous membrane, the pore size ratio a/b of an average long pore size a of the microporous membrane to a pore size b orthogonal to the average long pore size a is preferably 0.5 or greater and 30 or less from the viewpoint of high strength. The pore size ratio a/b is more preferably 1 or greater and 20 or less, and even more preferably 1.5 or greater and 15 or less from the viewpoint of high strength.

The separator preferably has a porosity of 30% or greater and 80% or less, and/or preferably has an air permeability (hereinafter, also referred to as "air permeability resistance") of 100 s/100 cm$^3$ or more and 500 s/100 cm$^3$ or less.

When the porosity is less than 30%, ensuring sufficient ion permeability in the microporous membrane when used in battery applications is difficult. When the porosity is greater than 80%, the microporous membrane cannot maintain sufficient strength. From such viewpoints, the porosity of the separator is more preferably 33% or greater and 77% or less, and even more preferably 37% or greater and 73% or less. In addition, it is suitable to adjust the air permeability resistance of the separator to 100 s/100 cm$^3$ or more from the viewpoint of obtaining a separator comprising a uniform microporous membrane with no defects. Further, adjusting the air permeability resistance of the separator to 500 s/100 cm$^3$ or less can preferably contribute to ensuring sufficient ion permeability. From such viewpoints, the air permeability resistance of the separator is more preferably 120 s/100 cm$^3$ or more and 450 s/100 cm$^3$ or less, and even more preferably 150 s/100 cm$^3$ or more and 400 s/100 cm$^3$ or less.

<Battery outer packaging>

Any known configuration can be adopted as the configuration of the battery outer packaging of the nonaqueous secondary battery of the present embodiment. For example, a battery can or a laminate film outer packaging may be used.

As the battery can, for example, a metal can composed of steel, stainless steel, aluminum, or clad material can be used.

The laminate film outer packaging can be used as an outer packaging by stacking two sheets with the hot melt resin side facing inward or folding over one so that the hot melt resin side faces inward, and then sealing the edge portions with heat sealing. When a laminate film outer packaging is used, a positive electrode lead body (or a positive electrode terminal and a lead tab connected to the positive electrode terminal) may be connected to the positive electrode current collector, and a negative electrode lead body (or a negative electrode terminal and a lead tab connected to the negative electrode terminal) may be connected to the negative electrode current collector. In this case, the laminate film outer packaging may be sealed with the edge portions of the positive electrode lead body and the negative electrode lead body (or lead tabs connected to the positive electrode terminal and the negative electrode terminal, respectively) pulled to the outside of the outer packaging.

As the laminate film outer packaging, for example, a laminate film composed of a triple-layer configuration of hot melt resin/metal film/resin can be used.

The aluminum laminate film constituting the battery outer packaging is preferably an aluminum foil coated on both sides with a polyolefin-based resin.

<Shape of nonaqueous secondary battery>

For the shape of the nonaqueous secondary battery according to the present embodiment, for example, a square type, a prismatic type, a cylindrical type, an elliptical type, a button type, a coin type, a flat type, or a laminate type can be applied.

For the nonaqueous secondary battery according to the present embodiment, in particular, a square type, a prismatic type, and a laminate type can be preferably applied.

<Manufacturing method of nonaqueous secondary battery>

The nonaqueous secondary battery according to the present embodiment can be manufactured by a known method, using the above electrolyte solution, a positive electrode having a positive electrode active material, a negative electrode having a negative electrode active material, a separator, and if necessary, a battery outer packaging.

A laminated body consisting of a positive electrode, a negative electrode, and a separator can first be formed. For example, a method of producing and winding a laminated body comprising a long positive electrode, a long negative electrode, and a corresponding long separator interposed between the positive electrode and the negative electrode to form a laminated body having a wound structure; a method of cutting a positive electrode and a negative electrode into a plurality of sheets having a certain area and shape and alternately layering the resulting positive electrode sheets and negative electrode sheets via separator sheets to form a laminated body having a layered structure; or a method of folding a long separator in a zigzagging manner and alternately inserting positive electrode sheets and negative electrode sheets between the zigzagging folds of the separator to form a laminated body having a layered structure is possible.

The above laminated body is then housed within a battery outer packaging (battery case), an electrolyte solution is injected into the inside of the battery case, and the laminated body is immersed in the electrolyte solution and sealed, whereby a nonaqueous secondary battery of the present embodiment can be produced.

When the arrangement of the electrodes is designed so that there is a portion where an outer peripheral edge of the negative electrode active material layer overlaps with an outer peripheral edge of the positive electrode active material layer or so that there is a part where the width in nonopposing portions of the negative electrode active material layer is too small, there is a risk that the charge-discharge cycle characteristics of the nonaqueous secondary battery deteriorate due to misalignment of the electrodes during battery assembly. Thus, it is preferable that the positions of the electrodes be fixed in advance with tape, such as polyimide tape, polyphenylene sulfide tape, or polypropylene (PP) tape, or adhesive when using the electrode bodies in the nonaqueous secondary battery.

In the present embodiment, when an electrolyte solution using acetonitrile is used, due to the high ion-conducting properties thereof, there is a possibility that lithium ions released from the positive electrode during the initial charge of the nonaqueous secondary battery disperse to the entire negative electrode. In nonaqueous secondary batteries, the negative electrode active material layer generally has a larger area than the positive electrode active material layer. However, when lithium ions are diffused and occluded to a location of the negative electrode active material layer not facing the positive electrode active material layer, the lithium ions remain in the negative electrode without being released during the initial discharge. Thus, the unreleased lithium ions contribute to irreversible capacity. For this reason, a nonaqueous secondary battery using an electrolyte solution containing acetonitrile may have low initial charge-discharge efficiency.

When the area of the positive electrode active material layer is larger than that of the negative electrode active material layer, or when both are the same, the concentration of current in the edge portions of the negative electrode active material layer during charging easily occurs, and lithium dendrites are easily generated.

The ratio of the area of the entire negative electrode active material layer to the area of the portion where the positive electrode active material layer and the negative electrode active material layer face each other is not particularly limited, but for the above reason, is preferably greater than 1.0 and less than 1.1, more preferably greater than 1.002 and less than 1.09, even more preferably greater than 1.005 and less than 1.08, and particularly preferably greater than 1.01 and less than 1.08. In a nonaqueous secondary battery using an electrolyte solution comprising acetonitrile, by decreasing the ratio of the area of the entire negative electrode active material layer to the area of the portion where the positive electrode active material layer and the negative electrode active material layer face each other, the initial charge-discharge efficiency can be improved.

Decreasing the ratio of the area of the entire negative electrode active material layer to the area of the portion where the positive electrode active material layer and the negative electrode active material layer face each other means limiting the ratio of the area of the negative electrode active material layer not facing the positive electrode active material layer. Consequently, of the lithium ions released from the positive electrode during the initial charge, the amount of lithium ions occluded in the portion of the negative electrode active material layer not facing the positive electrode active material layer (i.e., amount of lithium ions that are not released from the negative electrode during the initial discharge and become irreversible capacity) can be decreased as much as possible. Thus, by designing the ratio of the area of the entire negative electrode active material layer to the area of the portion where the positive electrode active material layer and the negative electrode active material layer face each other in the above range, initial charge-discharge efficiency of the battery can be enhanced and generation of lithium dendrites can be further suppressed, while aiming to improve load characteristics of the battery by using acetonitrile.

The nonaqueous secondary battery of the present embodiment can function as a battery upon the initial charge, and is stabilized by partially decomposing the electrolyte solution during the initial charge. The method of the initial charge is not particularly limited. However, the initial charge is preferably carried out at 0.001 to 0.3 C, more preferably 0.002 to 0.25 C, and even more preferably 0.003 to 0.2 C. An initial charge carried out via constant voltage partway along charging also contributes to preferable results. By setting a long voltage range in which the lithium salt is involved in the electrochemical reactions, a stable and strong SEI is formed uniformly on the surface of the electrode, which has an effect of suppressing an increase in internal resistance, and reaction products are not firmly fixed solely to the negative electrode, imparting in some way a favorable effect on members other than the negative electrode, such as the positive electrode and the separator. Therefore, carrying out the initial charge in consideration of the electrochemical reactions of the lithium salt dissolved in the electrolyte solution is very effective.

The nonaqueous secondary battery of the present embodiment can be used as a battery pack in which a plurality of nonaqueous secondary batteries are connected in series or in parallel. From the viewpoint of managing the charge and discharge states of the battery pack, the operating voltage range per battery is preferably 2 to 5 V, more preferably 2 to 4.5 V, and particularly preferably 2 V to 4.3 V.

When the size of the nonaqueous secondary battery is large, it is difficult for an electrolyte solution to permeate the entire separator, and it is thus preferable to leave the electrolyte solution after injection to stand for 12 h or more. From the viewpoint of improving efficiency of the manufacturing steps of the nonaqueous secondary battery, it is preferable to leave the electrolyte solution after injection to stand under reduced-pressure conditions and then seal the open portion. Further, from the viewpoint of simplifying the step of removing gas generated during film formation in the initial charge (degassing step), it is preferable to carry out the initial charge and discharge under reduced-pressure conditions without sealing the open portion.

However, by applying the above manufacturing steps, the electrolyte solution amount is easily decreased in an electrolyte solution containing the highly volatile acetonitrile, and thus the initial charge and discharge can be carried out in a state where a portion of the electrodes and the separator is not immersed in the electrolyte solution. In this case, it is expected that the charge-discharge reactions do not proceed satisfactorily in the portion where the electrolyte solution is not permeated, and therefore the battery capacity is decreased. If the non-permeated portion is permeated with the electrolyte solution by adding the electrolyte solution during the initial charge-discharge step, film formation during the initial charge is not satisfactorily carried out for the non-permeated portion, and thus reductive decomposition of the nonaqueous solvent easily proceeds, and is therefore expected to lead to a decrease in battery capacity.

The larger the area of the positive electrode or negative electrode of a battery, the more difficult the electrolyte solution permeation tends to be and the larger the gas generation amount tends to be, and thus the above manufacturing steps are often used. From the viewpoint of improving efficiency of the manufacturing process, the present embodiment is preferably applied to nonaqueous secondary batteries in which one of the areas of the positive electrode and the negative electrode is 100 cm$^2$ or more, more preferably applied to nonaqueous secondary batteries in which the area is 150 cm$^2$ or more, and even more preferably applied to nonaqueous secondary batteries in which the area is 200 cm$^2$ or more.

When the positive electrode and the negative electrode form a laminated body, the "area of the positive electrode" refers to the area obtained by adding up the areas of positive electrodes. Likewise, the "area of the negative electrode" refers to the area obtained by adding up the areas of negative electrodes. The above features are preferable from the viewpoint of enhancing performance of the nonaqueous secondary battery relating to the present embodiment to which the above manufacturing steps are applied.

From the above, the aspects for embodying the present invention have been described. However, the present invention is not limited to the above embodiments. The present invention can be modified in various ways without departing from the gist thereof.

EXAMPLES

Hereinafter, the present invention will be further described in detail by the Examples. The present invention is not limited only to these Examples. The tests and measurements of the Examples were carried out under room temperature conditions, unless specified otherwise.

[Examples 1 to 6 and Comparative Examples 1 to 11]

Preparation of nonaqueous electrolyte solution

Various nonaqueous solvents were mixed under an inert atmosphere so that each thereof had a predetermined concentration shown in Table 1. Organic polymers were added to the obtained nonaqueous solvents at ratios shown in Table 1. Various lithium salts were further added so that each thereof had a predetermined concentration, whereby electrolyte solutions (S01) to (S12) were prepared. These electrolyte solution compositions are shown in Table 1.

The abbreviations for the nonaqueous solvents, lithium salts, organic polymers, and additive in each table have the following meanings. The % by mass of the organic polymers and additive indicate parts by mass relative to 100 parts by mass of the electrolyte solution. The % by mass can be converted to % by volume from formula (2) below:

$$\{\text{value obtained by dividing mass of organic polymer by specific gravity}/(100 + \text{value obtained by dividing mass of organic polymer by specific gravity})\} \times 100 \tag{2}$$

and formula (3) below:

$$\{\text{value obtained by dividing mass of additive by specific gravity}/(100 + \text{value obtained by dividing mass of additive by specific gravity})\} \times 100. \tag{3}$$

(Lithium salt)

LiPF$_6$: lithium hexafluorophosphate
LiFSI: lithium bis(fluorosulfonyl)imide (LiN(SO$_2$F)$_2$)

(Nonaqueous solvent)

AcN: acetonitrile
EMC: ethyl methyl carbonate
EC: ethylene carbonate
PC: propylene carbonate
GBL: γ-butyrolactone
VC: vinylene carbonate
ES: ethylene sulfite

(Organic polymer)

P0903: polyethylene oxide (viscosity average molecular weight of 6000)
P2830: polyethylene oxide (viscosity average molecular weight of 20000)
SE-8: polyethylene oxide (viscosity average molecular weight of 93000)
P1819: polyethylene oxide (viscosity average molecular weight of 100000)
P1820: polyethylene oxide (viscosity average molecular weight of 600000)
SE-70: polyethylene oxide (viscosity average molecular weight of 63000)
P3727: polyethylene oxide (viscosity average molecular weight of 1000000)
P3728: polyethylene oxide (viscosity average molecular weight of 2000000)
P1822: poly(methyl methacrylate) (viscosity average molecular weight of 120000)
P4457: poly(methyl methacrylate) (viscosity average molecular weight of 350000)

(Additive)

P1022: tris(2-ethylhexyl) phosphate
The viscosity average molecular weights of the organic polymers were measured by the following method.

(1) Viscosity average molecular weight

A viscosity average molecular weight is evaluated by viscometry. The viscosity average molecular weights of the organic polymers were calculated from limiting viscosity numbers [η] measured in accordance with JIS K 7367-2:1999.

[Table 1]

[Table 1]

Table 1

| Electrolyte solution No. | Lithium salt [mol/L] | | Nonaqueous solvent composition [% by volume] | | | | | | | Organic polymer [% by mass] | | | | | | | | Additive [% by mass] |
|---|---|---|---|---|---|---|---|---|---|---|---|---|---|---|---|---|---|---|
| | $LiPF_6$ | LiFSI | AcN | EMC | EC | PC | GBL | VC | ES | P0903 | P2830 | SE-8 | P1819 | P1820 | SE-70 | P3727 | P3728 | P1022 |
| S01 | 0.3 | 1 | 35 | 39 | 20 | - | - | 2 | 4 | - | - | - | - | - | - | - | - | - |
| S02 | 0.3 | 1 | 35 | 39 | 20 | - | - | 2 | 4 | 1 | - | - | - | - | - | - | - | - |
| S03 | 0.3 | 1 | 35 | 39 | 20 | - | - | 2 | 4 | - | 1 | - | - | - | - | - | - | - |
| S04 | 0.3 | 1 | 35 | 39 | 20 | - | - | 2 | 4 | - | - | - | 0.5 | - | - | - | - | - |
| S05 | 0.3 | 1 | 35 | 39 | 20 | - | - | 2 | 4 | - | - | - | 1 | - | - | - | - | - |
| S06 | 0.3 | 1 | 35 | 39 | 20 | - | - | 2 | 4 | - | - | - | - | 0.5 | - | - | - | - |
| S07 | 0.3 | 1 | 35 | 39 | 20 | - | - | 2 | 4 | - | - | - | - | 1 | - | - | - | - |
| S08 | 0.3 | 1 | 35 | 39 | 20 | - | - | 2 | 4 | - | - | - | - | - | - | 0.1 | - | - |
| S09 | 0.3 | 1 | 35 | 39 | 20 | - | - | 2 | 4 | - | - | - | - | - | - | 0.5 | - | - |
| S10 | 0.3 | 1 | 35 | 39 | 20 | - | - | 2 | 4 | - | - | - | - | - | - | 1 | - | - |
| S11 | 0.3 | 3 | 35 | 39 | 20 | - | - | 2 | 4 | - | - | - | - | - | - | - | - | - |
| S12 | 0.3 | 5 | 35 | 39 | 20 | - | - | 2 | 4 | - | - | - | - | - | - | - | - | - |

The ionic conductivity and viscosity of each of the electrolyte solutions prepared as described in (1) above were measured by the following methods. Electrolyte solutions in which undissolved material or reprecipitation of organic polymer was observed after electrolyte solution preparation were marked with "-", and subsequent measurements and battery evaluations were not carried out.

(2) Ionic conductivity measurement

An electrolyte solution was prepared as described in (1) above, an ionic conductivity measuring cell "CT-58101B" (trade name) manufactured by Toa-DKK Corporation connected to an ionic conductivity meter "CM-41X" (trade name) manufactured by Toa-DKK Corporation was inserted into a container storing the electrolyte solution, and the ionic conductivity of the electrolyte solution at 25°C was measured.

(3) Viscosity measurement

An electrolyte solution was prepared as described in (1) above, the detection terminal of a vibration-type viscometer "VM-10A" (trade name) manufactured by Sekonic Corporation was inserted into a container storing the electrolyte solution, and the viscosity of the electrolyte solution at 25°C was measured.

The following Table 2 shows the results of ionic conductivity and viscosity measured at 25°C and the value Z determined from the formula (1), for electrolyte solutions S01 to S12.

[Table 2]

**Table 2**

|  | Electrolyte solution No. | Viscosity X [mPa·s] | Ionic conductivity Y [mS/cm] | Z |
|---|---|---|---|---|
| Example 1 | S04 | 4.1 | 18.6 | 75 |
| Example 2 | S06 | 11.8 | 18.5 | 218 |
| Example 3 | S08 | 4.9 | 18.7 | 91 |
| Example 4 | S09 | 13.7 | 18.6 | 255 |
| Comparative Example 1 | S01 | 2.3 | 19.1 | 44 |
| Comparative Example 2 | S02 | 3.1 | 18.5 | 56 |
| Comparative Example 3 | S03 | 3.5 | 18.4 | 65 |
| Comparative Example 4 | S05 | - | - | - |
| Comparative Example 5 | S07 | - | - | - |
| Comparative Example 6 | S10 | - | - | - |
| Comparative Example 7 | S11 | 10.7 | 11.3 | 121 |
| Comparative Example 8 | S12 | 39.3 | 5.0 | 197 |

As shown in the above table, each of the electrolyte solutions (Examples 1 to 4) according to the present embodiment had a viscosity of 4.1 mPa•s or more, an ionic conductivity of 18.5 mS/cm or more, and Z of 75 or greater. However, each of Comparative Examples 1 to 3 had a viscosity as low as 3.5 mPa•s or less and Z of 65 or less. For Comparative Examples 4 to 6, since undissolved material was observed after organic polymer addition after electrolyte solution preparation, measurements were not carried out. Comparative Example 7 had an ionic conductivity of 11.3 mS/cm and Comparative Example 8 had an ionic conductivity of 5.0 mS/cm, both of which were 13.0 mS/cm or less.

(4) Volatility test

An aluminum dish was placed on a weighing scale, 20 µl of the prepared electrolyte solution was dropped thereon, and a weight A was measured immediately after dropping. A weight B was measured from 2 min after dropping, and electrolyte solution volatility was evaluated from weight change by the following formula:

$$\{(\text{weight B} - \text{weight A})/\text{weight A}\} \times 100.$$

(5) Production of nonaqueous secondary battery

(5-1) Production of positive electrode

LiFePO$_4$ as a positive electrode active material, acetylene black powder as a conductive aid, and polyvinylidene fluoride (PVDF) as a binder were mixed at a mass ratio of 87:8:5 to obtain a positive electrode mixture.

N-methyl-2-pyrrolidone as a solvent was added to the obtained positive electrode mixture and further mixed to prepare a positive electrode mixture-containing slurry. To one side or both sides of an aluminum foil having a thickness of 15 $\mu$m acting as a positive electrode current collector, the positive electrode mixture-containing slurry was applied while adjusting the one-sided basis weight thereof to 20.7 mg/cm$^2$, and the solvent was removed by drying in a hot-air drying furnace, followed by rolling with a roll press so that the density of the positive electrode active material layer was 1.9 g/cm$^3$, to obtain a positive electrode consisting of a positive electrode active material layer and a positive electrode current collector. Vacuum drying was then carried out at 120°C for 12 h or more to obtain a positive electrode.

(5-2) Production of negative electrode

Graphite as a negative electrode active material and carboxymethyl cellulose (CMC) and styrene-butadiene rubber (SBR) as binders were mixed at a mass ratio 97.4:1.1:1.5 to obtain a negative electrode mixture.

Water as a solvent was added to the obtained negative electrode mixture and further mixed to prepare a negative electrode mixture-containing slurry. To one side or both sides of a copper foil having a thickness of 10 $\mu$m acting as a negative electrode current collector, the negative electrode mixture-containing slurry was applied while adjusting the one-sided basis weight thereof to 8.8 mg/cm$^2$, and the solvent was removed by drying in a hot-air drying furnace, followed by rolling with a roll press so that the density of the negative electrode active material layer was 1.4 g/cm$^3$, to obtain a negative electrode consisting of a negative electrode active material layer and a negative electrode current collector. Vacuum drying was then carried out at 80°C for 12 h or more to obtain a negative electrode.

(5-3) Production of separator

<Production of polypropylene resin composition>

Pellets of an ethylene/1-butene copolymer (C2/C4: density = 0.893 g/cm$^3$, melting point = 80°C, MFR = 6.7) were dry-blended with an ultra-high molecular weight polypropylene resin (PP, MFR = 0.25) at a mass ratio of PP : C2/C4 = 50:50 (% by mass), and then melt-kneaded using a ZSK-40 (manufactured by Coperion GmbH, LID = 46). To minimize decomposition and denaturation of the resin, the resin inlet hopper to the raw material tank was completely sealed, and nitrogen was continuously flowed from the bottom of the hopper to control the oxygen concentration near the raw material inlet to 50 ppm or less. In addition, all vents were completely sealed to eliminate air leakage into the cylinder. Because of the effect of this oxygen concentration decrease, decomposition and denaturation of the polymer, even under high-temperature conditions, were significantly suppressed, and the ethylene/1-butene copolymer could be finely dispersed. After melt kneading, strands were drawn from a die (8 holes). The melt-kneaded product was cooled in a water-cooled bath, and then cut using a pelletizer to obtain pellets.

<Production of microporous membrane (separator having triple-layer microporous membrane)>

The pellets were dry-blended with an ultra-high molecular weight polypropylene resin (PP, MFR = 0.25) at a mass ratio of PP : pellets = 90:10 (% by mass), then melted in a 2.5-inch extruder, and fed to an annular die using a gear pump. As a result, the incorporation ratio of added resin was PP : C2/C4 = 95.5 (% by mass).

The temperature of the die was set at 240°C, and the molten polymer was cooled by blown air and then wound into a roll. The extruded PP precursor (original film) had a thickness of 6 $\mu$m.

A high molecular weight polyethylene resin (PE, MFR = 0.38) was melted in a 2.5-inch extruder and supplied to an annular die using a gear pump.

The temperature of the die was set at 210°C, and the molten polymer was cooled by blown air and then wound into a roll. The extruded PE precursor (original film) had a thickness of 6 $\mu$m.

The obtained PP precursor and the obtained PE precursor were stacked in three layers with PP precursor/PE precursor/PP precursor and laminated at 120°C to obtain a triple-layer laminated original film. The original film was annealed at 125°C for 20 min. The annealed film was then cold-stretched to 15% at room temperature, then hot-stretched to 150% at 115°C, and relaxed to 103% at 125°C to form a separator with a structure having a triple-layer microporous membrane. After the above stretching and perforation, the physical properties of the separator were measured.

The physical properties of the separator produced above was measured by the following method.

[Average long pore size (mm) and pore size ratio]

The average long pore size of the microporous membrane was obtained by observing the surface of the microporous membrane with SEM and measuring the pore sizes on a SEM image. Specifically, from six images from which the microporous membrane surface was observed with SEM at 30,000× magnification, long pore sizes of micropores within the image range of 4.0 $\mu$m × 2.8 $\mu$m were all measured, and an average was calculated to obtain an average long pore size a. Further, the pore size in a direction orthogonal to the long pore size direction of each pore was measured, and an average was calculated to obtain an average pore size b. The pore size ratio (a/b) was calculated by dividing the average long pore size by the average pore size. FIG. 3 shows one example of a SEM image of a polypropylene microporous membrane as a separator. For example, the pore sizes and the pore size ratio can be calculated from the observation of FIG. 3.

[Measurement of thickness ($\mu$m)]

The thickness of the separator comprising a microporous membrane was measured at room temperature of 23 $\pm$ 2°C using an IDC112 Digimatic Indicator manufactured by Mitutoyo Corporation.

[Porosity (%)]

A sample in a 5 cm × 5 cm square was cut out from the separator comprising a microporous membrane, and the porosity was calculated from the volume and mass of the sample using the following formula:

porosity (%) = {(volume (cm$^3$) - mass (g)/density (g/cm$^3$) of resin composition)/volume (cm$^3$)} × 100.

[Air permeability resistance (s/100 cm$^3$)]

The air permeability resistance of the separator comprising a microporous membrane was measured using a Gurley air permeability meter in accordance with JIS P-8117.

The physical property values of the separator measured according to the above methods were 8.1 for pore size ratio, 25 $\mu$m for membrane thickness, 217 s/100 cm$^3$ for air permeability resistance, and 55% for porosity.

(5-4) Assembly of nonaqueous secondary battery

In a dry room having a dew point temperature of -80°C to -20°C, the lead-attached positive electrode and the lead-attached negative electrode after cutting were stacked via the separator to form a laminated body. The laminated body was housed within an aluminum laminate sheet outer packaging. 7.0 g of the electrolyte solution was then injected into the outer packaging, and a reduced-pressure step for impregnating the separator with the electrolyte solution was carried out. The reduced-pressure step comprised repeating three times an operation of evacuating from normal pressure to 60 kPa, and then upon reaching 60 kPa, immediately returning to normal pressure; subsequently, evacuating from normal pressure to 60 kPa, maintaining this state for 30 s, and returning to normal pressure; and finally, repeating three times an operation of evacuating from normal pressure to 60 kPa, and then upon reaching 60 kPa, immediately returning to normal pressure. After the reduced-pressure step had finished, the outer packaging was sealed to obtain a nonaqueous secondary battery. The areas of the electrodes were 56 mm wide × 378 mm long and 56 mm wide × 304 mm long for the positive electrodes, and 58 mm wide × 401 mm long and 58 mm wide × 342 mm long for the negative electrodes, alternately layered and wound with separators therebetween.

(6) Evaluation of nonaqueous secondary battery

The nonaqueous secondary battery obtained as described above was first subjected to an initial charge process and initial charge-discharge capacity measurement according to the procedures (6-1) and (6-2) below. The nonaqueous secondary battery was then evaluated according to the procedure (6-2). A TOSCAT-300 (trade name) manufactured by Toyo System Co., Ltd. and an LU-123 (trade name) or BTS-408C (trade name) manufactured by ESPEC Corp. were used for charging and discharging.

1 C herein means a current value at which a battery in a fully charged state discharging at a constant current is expected to be completely discharged in 1 h.

(6-1) Initial charge-discharge process of nonaqueous secondary battery

The ambient temperature of the produced nonaqueous secondary battery was set at 25°C, and charging was carried out at a constant current equivalent to 0.025 C until a battery voltage of 3.5 V was reached. Constant voltage charging was then continued for 2 h while the battery voltage was maintained at 3.5 V and the current was attenuated, or until the charge capacity reached 90% of the design capacity. After charging, a rest period of 20 min was taken. Discharging was then carried out at a constant current of 0.1 C to 2.0 V.

(6-2) Finishing charge-discharge process

After the process in (6-1), the ambient temperature of nonaqueous secondary battery was set at 25°C, and charging was carried out at a constant current of 0.2 C to 3.5 V. Constant voltage charging was then continued for 2 h while the voltage was maintained at 3.5 V and the current was attenuated, or until the current value was attenuated to 0.05 C. After charging, a rest period of 20 min was taken. Discharging was then carried out at a constant current of 0.2 C to 2.0 V.

(6-3) 45°C cycle test of nonaqueous secondary battery

The nonaqueous secondary battery subjected to the initial charge-discharge process in the methods described in (6-1) and (6-2) above had the ambient temperature thereof set at 45°C. The battery was first charged at a constant current of 1 C until 3.5 V was reached, and then charged at a constant voltage of 3.5 V until the current was attenuated to 0.05 C. After charging, a rest period of 10 min was taken. The battery was then discharged at 1 C to 2.5 V. A step in which charging and discharging were each carried out once was defined as one cycle, and 300 cycles of charging and discharging were carried out. The discharge capacity at the 300th cycle, when the discharge capacity at the first cycle was 100%, was defined as the discharge capacity retention rate in a 45°C cycle test.

Electrolyte solution volatility was evaluated according to the method described in (4) above, using the electrolyte solutions in Table 1. Cycle performance of nonaqueous secondary batteries was also evaluated according to the method described in (6) above. The test results are shown in Table 3.

[Table 3]

**Table 3**

|  | Electrolyte solution No. | Volatility [%] | Discharge capacity retention rate after 300 cycles [%] |
|---|---|---|---|
| Example 5 | S05 | 10.4 | 78.5 |
| Example 6 | S07 | 10.5 | 78.5 |
| Comparative Example 9 | S01 | 12.7 | 59.0 |
| Comparative Example 10 | S02 | 13.3 | 42.0 |
| Comparative Example 11 | S03 | 13.0 | 51.0 |

As shown in Table 3, each of the nonaqueous secondary batteries (Comparative Examples 9 to 11) had a weight change as large as 12.7% or greater at 2 min after the electrolyte solution was dropped, indicating high volatility. Since acetonitrile volatilized in the reduced-pressure step when producing the batteries, the discharge capacity retention rates were 59% or less. However, each of the nonaqueous secondary batteries (Examples 5 and 6) according to the present embodiment had a weight change as small as 10.5% or less at 2 min after the electrolyte solution was dropped, and volatility was suppressed. The discharge capacity retention rates after 300 cycles for Examples 5 and 6 were both 78.5%.

[Examples 7 to 10 and Comparative Examples 12 to 17]

Various nonaqueous solvents were mixed under an inert atmosphere so that each thereof had a predetermined concentration shown in Table 4. Organic polymers were added to the obtained nonaqueous solvents at ratios shown in Table 4. Various lithium salts were further added so that each thereof had a predetermined concentration, whereby electrolyte solutions (S13) to (S19) were prepared. These electrolyte solution compositions are shown in Table 4.

[Table 4]

Table 4

| Electrolyte solution No. | Lithium salt [mol/L] | | Nonaqueous solvent composition [% by volume] | | | | | | | Organic polymer [% by mass] | | | | | | | | Additive [% by mass] |
|---|---|---|---|---|---|---|---|---|---|---|---|---|---|---|---|---|---|---|
| | LiPF$_6$ | LiFSI | AcN | EMC | EC | PC | GBL | VC | ES | P0903 | P2830 | SE-8 | P1819 | P1820 | SE-70 | P3727 | P3728 | P1022 |
| S13 | 0.3 | 1 | 47 | 27 | 20 | - | - | 2 | 4 | - | - | - | - | - | - | - | - | - |
| S14 | 0.3 | 1 | 47 | 27 | 20 | 20 | - | 2 | 4 | - | - | - | - | - | - | - | - | - |
| S15 | 0.3 | 1 | 47 | 27 | 20 | - | 20 | 2 | 4 | - | - | - | - | - | - | - | - | - |
| S16 | 0.3 | 1 | 47 | 27 | 20 | - | - | 2 | 4 | - | - | - | 1 | - | - | - | - | - |
| S17 | 0.3 | 1 | 47 | 27 | 20 | - | - | 2 | 4 | - | - | - | 5 | - | - | - | - | - |
| S18 | 0.3 | 1 | 47 | 27 | 20 | - | - | 2 | 4 | - | - | - | - | 1 | - | - | - | - |
| S19 | 0.3 | 1 | 47 | 27 | 20 | - | - | 2 | 4 | - | - | - | - | 5 | - | - | - | - |

33

EP 4 503 230 A1

Table 5 shows the results of ionic conductivity and viscosity measured at 25°C and the value Z determined from the formula (1), for electrolyte solutions S13 to S19.

[Table 5]

**Table 5**

|  | Electrolyte solution No. | Viscosity X [mPa·s] | Ionic conductivity Y [mS/cm] | Z |
|---|---|---|---|---|
| Example 7 | S16 | 4.9 | 22.0 | 108 |
| Example 8 | S18 | 22.8 | 21.9 | 499 |
| Comparative Example 12 | S13 | 2.2 | 22.4 | 49 |
| Comparative Example 13 | S14 | 2.0 | 22.7 | 46 |
| Comparative Example 14 | S15 | 1.9 | 24.4 | 46 |
| Comparative Example 15 | S17 | - | - | - |
| Comparative Example 16 | S19 | - | - | - |

As shown in Table 5, the electrolyte solution (Example 7) according to the present embodiment had a viscosity of 4.9 mPa·s, an ionic conductivity of 22.0 mS/cm, and Z of 108. The electrolyte solution (Example 8) according to the present embodiment had a viscosity of 22.8 mPa·s, an ionic conductivity of 21.9 mS/cm, and Z of 499. However, each of the electrolyte solutions (Comparative Examples 12 to 14) had a viscosity as low as 2.2 mPa·s or less and Z of 49 of less. Particularly, Comparative Example 14 had a viscosity that fell below 2.0 mPa·s, and high volatility was presumed. For Comparative Examples 15 and 16, since undissolved material was observed after organic polymer addition after electrolyte solution preparation, measurements were not carried out.

Electrolyte solution volatility was evaluated according to the method described in (4) above, using the electrolyte solutions in Table 4. Cycle performance of nonaqueous secondary batteries was also evaluated according to the method described in (6) above. The test results are shown in Table 6.

[Table 6]

**Table 6**

|  | Electrolyte solution No. | Volatility [%] | Discharge capacity retention rate after 300 cycles [%] |
|---|---|---|---|
| Example 9 | S16 | 11.6 | 69.0 |
| Example 10 | S18 | 11.2 | 70.0 |
| Comparative Example 17 | S13 | 13.3 | 41.5 |

As shown in Table 6, the nonaqueous secondary battery (Comparative Example 17) had a weight change as large as 13.3% or greater at 2 min after the electrolyte solution was dropped, indicating high volatility. Since acetonitrile volatilized in the reduced-pressure step when producing the battery, the discharge capacity retention rate was 41.5%. However, each of the nonaqueous secondary batteries (Examples 9 and 10) according to the present embodiment had a weight change as small as 11.6% or less at 2 min after the electrolyte solution was dropped, and volatility was suppressed. The discharge capacity retention rates after 300 cycles were 69.0% or greater.

[Examples 11 to 23 and Comparative Examples 18 to 27]

Various nonaqueous solvents were mixed under an inert atmosphere so that each thereof had a predetermined concentration shown in Table 7. Organic polymers were added to the obtained nonaqueous solvents at ratios shown in Table 7. Various lithium salts were further added so that each thereof had a predetermined concentration, whereby electrolyte solutions (S20) to (S36) were prepared. These electrolyte solution compositions are shown in Table 7.

[Table 7]

[Table 7]

Table 7

| Electrolyte solution No. | Lithium salt [mol/L] | | Nonaqueous solvent composition [% by volume] | | | | | | | Organic polymer [% by mass] | | | | | | | | Additive [% by mass] |
|---|---|---|---|---|---|---|---|---|---|---|---|---|---|---|---|---|---|---|
| | LiPF$_6$ | LiFSI | AcN | EMC | EC | PC | GBL | VC | ES | P0903 | P2830 | SE-8 | P1819 | P1820 | SE-70 | P3727 | P3728 | P1022 |
| S20 | 0.3 | 1 | 60 | 14 | 20 | - | - | 2 | 4 | - | - | - | - | - | - | - | - | - |
| S21 | 0.3 | 1 | 60 | 14 | 20 | - | - | 2 | 4 | 1 | - | - | - | - | - | - | - | - |
| S22 | 0.3 | 1 | 60 | 14 | 20 | - | - | 2 | 4 | 5 | - | - | - | - | - | - | - | - |
| S23 | 0.3 | 1 | 60 | 14 | 20 | - | - | 2 | 4 | - | 1 | - | - | - | - | - | - | - |
| S24 | 0.3 | 1 | 60 | 14 | 20 | - | - | 2 | 4 | - | 5 | - | - | - | - | - | - | - |
| S25 | 0.3 | 1 | 60 | 14 | 20 | - | - | 2 | 4 | - | - | 3 | - | - | - | - | - | - |
| S26 | 0.3 | 1 | 60 | 14 | 20 | - | - | 2 | 4 | - | - | - | 1 | - | - | - | - | - |
| S27 | 0.3 | 1 | 60 | 14 | 20 | - | - | 2 | 4 | - | - | - | 5 | - | - | - | - | - |
| S28 | 0.3 | 1 | 60 | 14 | 20 | - | - | 2 | 4 | - | - | - | - | 1 | - | - | - | - |
| S29 | 0.3 | 1 | 60 | 14 | 20 | - | - | 2 | 4 | - | - | - | - | 3 | - | - | - | - |
| S30 | 0.3 | 1 | 60 | 14 | 20 | - | - | 2 | 4 | - | - | - | - | 3 | - | - | - | 1 |
| S31 | 0.3 | 1 | 60 | 14 | 20 | - | - | 2 | 4 | - | - | - | - | 5 | - | - | - | - |
| S32 | 0.3 | 1 | 60 | 14 | 20 | - | - | 2 | 4 | - | - | - | - | - | 3 | - | - | - |
| S33 | 0.3 | 1 | 60 | 14 | 20 | - | - | 2 | 4 | - | - | - | - | - | - | 0.1 | - | - |
| S34 | 0.3 | 1 | 60 | 14 | 20 | - | - | 2 | 4 | - | - | - | - | - | - | 0.5 | - | - |
| S35 | 0.3 | 1 | 60 | 14 | 20 | - | - | 2 | 4 | - | - | - | - | - | - | 1 | - | - |
| S36 | 0.3 | 1 | 60 | 14 | 20 | - | - | 2 | 4 | - | - | - | - | - | - | - | 1 | - |

The following Table 8 shows the results of ionic conductivity and viscosity measured at 25°C and the value Z determined from the formula (1), for electrolyte solutions S20 to S36.

[Table 8]

**Table 8**

|  | Electrolyte solution No. | Viscosity X [mPa·s] | Ionic conductivity Y [mS/cm] | Z |
|---|---|---|---|---|
| Example 11 | S25 | 15.5 | 25.1 | 389 |
| Example 12 | S26 | 4.0 | 26.5 | 107 |
| Example 13 | S28 | 18.5 | 26.5 | 490 |
| Example 14 | S29 | 121.0 | 24.3 | 2940 |
| Example 15 | S30 | 117.0 | 24.1 | 2820 |
| Example 16 | S32 | 158.0 | 25.1 | 3966 |
| Example 17 | S33 | 3.3 | 26.5 | 87 |
| Example 18 | S34 | 11.2 | 26.2 | 293 |
| Comparative Example 18 | S20 | 1.9 | 26.9 | 50 |
| Comparative Example 19 | S21 | 2.3 | 26.4 | 59 |
| Comparative Example 20 | S22 | - | - | - |
| Comparative Example 21 | S23 | 2.5 | 26.4 | 67 |
| Comparative Example 22 | S24 | - | - | - |
| Comparative Example 23 | S27 | - | - | - |
| Comparative Example 24 | S31 | - | - | - |
| Comparative Example 25 | S35 | - | - | - |
| Comparative Example 26 | S36 | - | - | - |

As shown in Table 8, each of the electrolyte solutions (Examples 11 to 18) according to the present embodiment had a viscosity of 3.3 mPa·s or more, an ionic conductivity of 24.1 mS/cm or more, and Z of 87 or greater. In view of the electrolyte solutions (Comparative Examples 18 to 26), Comparative Example 18 had a viscosity of less than 2.0 mPa·s. Comparative Examples 19 and 21 each had a viscosity as low as 2.5 mPa·s or less and Z of 67 or less. For Comparative Examples 20 and 22 to 26, since undissolved material was observed after organic polymer addition after electrolyte solution preparation, measurements were not carried out.

Electrolyte solution volatility was evaluated according to the method described in (4) above, using the electrolyte solutions in Table 7. Cycle performance of nonaqueous secondary batteries was also evaluated according to the method described in (6) above. The test results are shown in Table 9.

[Table 9]

**Table 9**

|  | Electrolyte solution No. | Volatility [%] | Discharge capacity retention rate after 300 cycles [%] |
|---|---|---|---|
| Example 19 | S25 | 12.8 | 52.0 |
| Example 20 | S26 | 13.1 | 52.0 |
| Example 21 | S28 | 12.6 | 53.0 |
| Example 22 | S30 | 11.4 | 70.0 |

(continued)

|  | Electrolyte solution No. | Volatility [%] | Discharge capacity retention rate after 300 cycles [%] |
|---|---|---|---|
| Example 23 | S32 | 12.4 | 61.5 |
| Comparative Example 27 | S20 | 15.1 | 24.0 |

As shown in Table 9, the nonaqueous secondary battery (Comparative Example 27) had a weight change as large as 15.1% at 2 min after the electrolyte solution was dropped, indicating high volatility. Since acetonitrile volatilized in the reduced-pressure step when producing the battery, the discharge capacity retention rate after 300 cycles was 24.0%. However, each of the nonaqueous secondary batteries (Examples 19 and 23) according to the present embodiment had a weight change as small as 13.1% or less at 2 min after the electrolyte solution was dropped, and volatility was suppressed. The discharge capacity retention rates after 300 cycles were 52.0% or greater. Among these Examples, Example 22 had a weight change of 11.4%, and volatility was particularly suppressed. The discharge capacity retention rate after 300 cycles was 70.0%.

[Examples 24 to 29 and Comparative Examples 28 and 29]

Various nonaqueous solvents were mixed under an inert atmosphere so that each thereof had a predetermined concentration shown in Table 10. Organic polymers were added to the obtained nonaqueous solvents at ratios shown in Table 10. Various lithium salts were further added so that each thereof had a predetermined concentration, whereby electrolyte solutions (S40) to (S43) were prepared. These electrolyte solution compositions are shown in Table 10.

[Table 10]

**Table 10**

| Electrolyte solution No. | Lithium salt [mol/L] | | Nonaqueous solvent composition [% by volume] | | | | | Organic polymer [% by mass] | |
|---|---|---|---|---|---|---|---|---|---|
|  | $LiPF_6$ | LiFSI | AcN | EMC | EC | VC | ES | P 1822 | P4457 |
| S40 | 0.3 | 1 | 35 | 38.7 | 20 | 2.5 | 3.8 | - | - |
| S41 | 0.3 | 1 | 35 | 38.7 | 20 | 2.5 | 3.8 | 1 | - |
| S42 | 0.3 | 1 | 35 | 38.7 | 20 | 2.5 | 3.8 | 10 | - |
| S43 | 0.3 | 1 | 35 | 38.7 | 20 | 2.5 | 3.8 | - | 1 |

The following Table 11 shows the results of viscosity and ionic conductivity measured at 25°C and the value Z calculated from the formula (1), for electrolyte solutions S40 to S43.

[Table 11]

**Table 11**

|  | Electrolyte solution No. | Viscosity X [mPa·s] | Ionic conductivity Y [mS/cm] | Z |
|---|---|---|---|---|
| Example 24 | S41 | 3.9 | 18.0 | 70 |
| Example 25 | S42 | 40.8 | 13.0 | 530 |
| Example 26 | S43 | 6.4 | 18.2 | 117 |
| Comparative Example 28 | S40 | 2.3 | 19.0 | 43 |

As shown in Table 11, in view of the electrolyte solutions (Examples 24 to 26) according to the present embodiment, Example 24 had a viscosity of 3.9 mPa·s, an ionic conductivity of 18.0 mS/cm, and Z of 70. Example 25 had a viscosity of 40.8 mPa·s, an ionic conductivity of 13.0 mS/cm, and Z of 530. Example 26 had a viscosity of 6.4 mPa·s, an ionic conductivity of 18.2 mS/cm, and Z of 117. However, the electrolyte solution (Comparative Example 28) had a viscosity that fell below 3.0 mPa·s.

Electrolyte solution volatility was evaluated according to the method described in (4) above, using the electrolyte solutions in Table 7. Cycle performance of nonaqueous secondary batteries was also evaluated according to the method described in (6) above. The test results are shown in Table 9.

[Table 12]

**Table 12**

| | Electrolyte solution No. | Volatility [%] | Discharge capacity retention rate after 300 cycles [%] |
|---|---|---|---|
| Example 27 | S41 | 10.6 | 76.0 |
| Example 28 | S42 | 10.2 | 81.9 |
| Example 29 | S43 | 11.5 | 70.0 |
| Comparative Example 29 | S40 | 12.4 | 60.5 |

As shown in Table 12, the nonaqueous secondary battery (Comparative Example 29) had a weight change as large as 12.4% at 2 min after the electrolyte solution was dropped, indicating high volatility. Since acetonitrile volatilized in the reduced-pressure step when producing the battery, the discharge capacity retention rate after 300 cycles was 60.5%. However, each of the nonaqueous secondary batteries (Examples 27 to 29) according to the present embodiment had a weight change as small as 11.5% or less at 2 min after the electrolyte solution was dropped, and volatility was suppressed. The discharge capacity retention rates after 300 cycles were 70.0% or greater. Among these Examples, Example 28 had a weight change of 10.2%, and volatility was particularly suppressed. The discharge capacity retention rate after 300 cycles was 81.9%.

As indicated in the present results, it was clear that by using an electrolyte solution and a nonaqueous secondary battery within the scope of requirements according to the present invention, a nonaqueous secondary battery having suppressed electrolyte solution volatility and high ionic conductivity even when using an electrolyte solution comprising acetonitrile can be provided.

INDUSTRIAL APPLICABILITY

The electrolyte solution within the scope of requirements of the present invention can be used in batteries that require suppression of volatility, and thus the nonaqueous secondary battery of the present invention that uses a nonaqueous solvent is particularly expected to be used, for example, as rechargeable batteries for portable devices such as mobile phones, portable audio devices, personal computers, and IC (integrated circuit) tags; rechargeable batteries for automobiles such as hybrid vehicles, plug-in hybrid vehicles, and electric vehicles; low-voltage power sources such as 12 V-class power sources, 24 V-class power sources, and 48 V-class power sources; and in residential power storage systems and IoT devices. In addition, the nonaqueous secondary battery of the present invention using a nonaqueous solvent can be used in applications for cold regions and outdoor applications in the summer.

REFERENCE SIGNS LIST

    100 nonaqueous secondary battery
    110 battery outer packaging
    120 space in battery outer packaging
    130 positive electrode lead body
    140 negative electrode lead body
    150 positive electrode
    160 negative electrode

170 separator

## Claims

1. A nonaqueous secondary battery comprising a positive electrode containing one or more positive electrode active materials capable of occluding and releasing lithium ions, a negative electrode containing a material capable of occluding and releasing lithium ions, a nonaqueous electrolyte solution, and a separator, wherein

the nonaqueous electrolyte solution comprises a nonaqueous solvent, a lithium salt, and an organic polymer,
the nonaqueous solvent comprises 10% by volume or greater and 90% by volume or less of acetonitrile,
the lithium salt comprises a lithium-containing imide salt and is contained in an amount of 0.5 mol/L or more and 2 mol/L or less relative to the nonaqueous electrolyte solution,
the organic polymer has a viscosity average molecular weight of 30,000 or greater and 1,000,000 or less, and
the nonaqueous electrolyte solution has a viscosity at 25°C of 2 mPa·s or more and 500 mPa·s or less, an ionic conductivity of 13 mS/cm or more, and a value Z represented by formula (1) below:

$$Z = \text{viscosity (mPa·s) of electrolyte solution} \times \text{ionic conductivity (mS/cm) of electrolyte solution}$$

$$\cdots (1)$$

of 70 or greater.

2. The nonaqueous secondary battery according to claim 1, wherein the organic polymer has at least one of structures of a polyether structure and an ester structure.

3. The nonaqueous secondary battery according to claim 1 or 2, wherein the organic polymer comprises at least one of polyethylene oxide and poly(methyl methacrylate).

4. The nonaqueous secondary battery according to claim 1 or 2, wherein the organic polymer has a viscosity average molecular weight of 90,000 or greater and 650,000 or less.

5. The nonaqueous secondary battery according to claim 1 or 2, wherein the organic polymer is contained in an amount of 0.1% by mass or greater and 10% by mass or less relative to a total amount of the nonaqueous electrolyte solution.

6. The nonaqueous secondary battery according to claim 1 or 2, wherein the organic polymer is contained in an amount of 0.1% by mass or greater and 3% by mass or less relative to a total amount of the nonaqueous electrolyte solution.

7. The nonaqueous secondary battery according to claim 1 or 2, wherein at least one of areas of the positive electrode and the negative electrode is 100 cm$^2$ or more.

8. The nonaqueous secondary battery according to claim 1 or 2, wherein any of structural bodies of

a wound body in which a laminated body in which the separator is interposed between the positive electrode and the negative electrode is wound;
a laminated body in which positive electrode and negative electrode sheets are alternately layered via the separator; and
a laminated body in which positive electrodes and negative electrodes are alternately inserted between zigzagging folds of the separator

is housed within a battery outer packaging.

9. The nonaqueous secondary battery according to claim 1 or 2, wherein the nonaqueous electrolyte solution has a viscosity at 25°C of 2.5 mPa·s or more and 150 mPa·s or less and an ionic conductivity at 25°C of 10 mS/cm or more and 40 mS/cm or less.

10. The nonaqueous secondary battery according to claim 1 or 2, wherein

the lithium salt further comprises lithium hexafluorophosphate (LiPF$_6$), and

the lithium-containing imide salt and the LiPF$_6$ are contained in a molar concentration so that the LiPF$_6$ < the lithium-containing imide salt.

11. The nonaqueous secondary battery according to claim 1 or 2, wherein the nonaqueous solvent comprises 20% by volume or greater and 90% by volume or less of acetonitrile.

12. The nonaqueous secondary battery according to claim 1 or 2, wherein the separator has a porosity of 20% or greater and 90% or less and an air permeability resistance of 20 s/100 cm$^3$ or more and 500 s/100 cm$^3$ or less.

13. The nonaqueous secondary battery according to claim 1 or 2, wherein

   the separator
   comprises a porous layer comprising, on one side or both sides thereof, an inorganic filler,
   the inorganic filler is at least one selected from the group consisting of aluminum oxide, aluminum hydroxide oxide, and aluminum silicate.

14. The nonaqueous secondary battery according to claim 1 or 2, wherein

   the separator comprises a polypropylene-based microporous membrane,
   in the microporous membrane, polymer matrices comprising the polypropylene extend along one direction perpendicular to membrane thickness,
   fibrils comprising the polypropylene are formed between the polymer matrices, and
   micropores are formed between a plurality of the fibrils.

15. The nonaqueous secondary battery according to claim 1 or 2, wherein

   the separator comprises a polypropylene-based microporous membrane, and
   a pore size ratio a/b of an average long pore size a of the microporous membrane to a pore size b orthogonal to the average long pore size a is 0.5 or greater and 30 or less.

16. A nonaqueous electrolyte solution for use in a nonaqueous secondary battery comprising a positive electrode containing one or more positive electrode active materials capable of occluding and releasing lithium ions, a negative electrode containing a material capable of occluding and releasing lithium ions, the nonaqueous electrolyte solution, and a separator, wherein

   the nonaqueous electrolyte solution comprises a nonaqueous solvent, a lithium salt, and an organic polymer,
   the nonaqueous solvent comprises 10% by volume or greater and 90% by volume or less of acetonitrile,
   the lithium salt comprises a lithium-containing imide salt and is contained in an amount of 0.5 mol/L or more and 2 mol/L or less relative to the nonaqueous electrolyte solution,
   the organic polymer has a viscosity average molecular weight of 30,000 or greater and 1,000,000 or less, and
   the nonaqueous electrolyte solution has a viscosity at 25°C of 2 mPa·s or more and 500 mPa·s or less, an ionic conductivity of 13 mS/cm or more, and Z represented by formula (1) below:

$$Z = \text{viscosity (mPa·s) of electrolyte solution} \times \text{ionic conductivity (mS/cm) of electrolyte solution} \cdots (1)$$

   of 70 or greater.

# Fig. 1

# Fig. 2

Fig. 3

170628-54 1.0kV 7.2mm x30.0k SE(M)     1.00um

| INTERNATIONAL SEARCH REPORT | International application No. |
|---|---|
| | **PCT/JP2023/012953** |

**A. CLASSIFICATION OF SUBJECT MATTER**

*H01M 10/0567*(2010.01)i; *H01M 10/052*(2010.01)i; *H01M 10/0568*(2010.01)i; *H01M 10/0569*(2010.01)i; *H01M 50/417*(2021.01)i; *H01M 50/443*(2021.01)i; *H01M 50/451*(2021.01)i; *H01M 50/463*(2021.01)i; *H01M 50/491*(2021.01)i

FI: H01M10/0567; H01M10/0569; H01M10/0568; H01M10/052; H01M50/417; H01M50/463 B; H01M50/491; H01M50/451; H01M50/443 M

According to International Patent Classification (IPC) or to both national classification and IPC

**B. FIELDS SEARCHED**

Minimum documentation searched (classification system followed by classification symbols)

H01M10/0567; H01M10/052; H01M10/0568; H01M10/0569; H01M50/417; H01M50/443; H01M50/451; H01M50/463; H01M50/491

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2021/172456 A1 (ZEON CORPORATION) 02 September 2021 (2021-09-02) claims | 1-16 |
| A | WO 2021/241761 A1 (ASAHI KASEI KABUSHIKI KAISHA) 02 December 2021 (2021-12-02) claims | 1-16 |
| A | JP 64-054674 A (SUMITOMO ELECTRIC IND LTD) 02 March 1989 (1989-03-02) claims | 1-16 |
| A | JP 2021-111586 A (ASAHI KASEI KABUSHIKI KAISHA) 02 August 2021 (2021-08-02) claims | 1-16 |

☐ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **02 June 2023** | **13 June 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

INTERNATIONAL SEARCH REPORT
Information on patent family members

| International application No. |
| --- |
| **PCT/JP2023/012953** |

| Patent document cited in search report | | | Publication date (day/month/year) | Patent family member(s) | | | Publication date (day/month/year) |
| --- | --- | --- | --- | --- | --- | --- | --- |
| WO | 2021/172456 | A1 | 02 September 2021 | EP claims | 4113652 | A1 | |
| | | | | CN | 115136376 | A | |
| | | | | KR 10-2022-0148817 | | A | |
| WO | 2021/241761 | A1 | 02 December 2021 | US claims | 2022/0293929 | A1 | |
| | | | | EP | 4009398 | A1 | |
| | | | | KR 10-2022-0035220 | | A | |
| | | | | CN | 114342145 | A | |
| JP | 64-054674 | A | 02 March 1989 | (Family: none) | | | |
| JP | 2021-111586 | A | 02 August 2021 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014013659 A

- JP 2000133309 A